# EUROPEAN PATENT SPECIFICATION

(11) **EP 3 162 079 B1**
(45) Date of publication and mention of the grant of the patent: **23.12.2020**
(21) Application number: 15815223.1
(22) Date of filing: 30.06.2015
(51) Int. Cl.: H04N 21/433, H04N 21/45, H04N 5/76, G06F 11/34, G06F 3/14, G06Q 10/06, G11B 27/031, G11B 27/10, G11B 27/11, G11B 27/34, H04M 3/51, G11B 27/32, H04N 5/765, G09C 1/00, H04N 9/82, H04M 3/42

(54) **SYSTEM AND METHOD FOR RECORDING AGENT INTERACTIONS**
SYSTEM UND VERFAHREN ZUR AUFZEICHNUNG VON AGENTENINTERAKTIONEN
SYSTÈME ET PROCÉDÉ POUR ENREGISTRER DES INTERACTIONS D'AGENTS

(30) Priority: 30.06.2014 US 201414320528; 30.06.2014 US 201414320502
(43) Date of publication of application: 03.05.2017
(73) Proprietor: Greeneden U.S. Holdings II, LLC, Daly City, CA 94014 (US)
(72) Inventor: LUM, Henry, Daly City, California 94014 (US); LAM, Anthony, Daly City, California 94014 (US); OLLINGER, David, Daly City, California 94014 (US)
(74) Representative: FRKelly
(86) International application number: PCT/US2015/038655
(87) International publication number: WO 2016/004100

(56) References cited:
- WO-A1-2013/149027
- WO-A1-2013/180697
- WO-A2-03/021927
- US-A1- 2004 143 630
- US-A1- 2004 249 650
- US-A1- 2006 168 188
- US-A1- 2007 300 179
- US-A1- 2008 030 797
- US-A1- 2009 132 918
- US-A1- 2011 099 182
- US-A1- 2013 110 565
- US-A1- 2013 110 565
- US-A1- 2013 142 332
- US-A1- 2013 159 822
- US-B1- 7 647 555

## Description

### FIELD

Aspects of embodiments of the present invention relate to a system and method for recording agent interactions.

### BACKGROUND

Interactions between customers and agents of a contact center are often recorded, for example to document the nature and occurrence of statements during interactions, to evaluate agent performance during interactions, or to facilitate future agent training. During the course of a long period of time, for example, a full work day, an individual agent may interact with many different customers and agents using multiple communication channels, often communicating with multiple customers or other agents at the same time. Furthermore, the various forms of communication may involve multiple different types of communication media, such as voice and audio data, text data, and video data, all occurring at different times or simultaneously. Synchronizing these various channels of communication for playback may be difficult. Further, it may be difficult to navigate to specific events that occur during a long screen recording session. For example, when an agent's screen is recorded throughout the course of a long work shift, in order for a supervisor to review the agent's performance during an isolated activity, the supervisor may need to review long segments of the screen recording in order to locate and review the isolated activity.

US 2013/0110565 A1 discloses a user activity management system including recording activity which may include audio, video or image, screen capture, data from a sensor, location information, computer usage; electronic communications, or social networking activities; transmitting activity information to a network cloud; making available for analyzing, viewing, reporting, training, or alerting; attaching a user activity record to IT systems; or verifying user commitments. Playback or supervisor review of recordings; incorporating feedback into an employee or user record; incorporating notes-to-self may be provided and selecting an activity as a best practice for training purposes may be enabled.

US 2004/0143630 A1 discloses a system and method for sharing and recording information on a wired or wireless computer network during synchronous and asynchronous sessions. A software program uses computers to enhance the collaboration, teaching, learning, presentation, and sharing of information and to record multi-media events for later playback and interaction with these events. Collaboration is enhanced by using features that allow broadcasting presentations, sharing, editing and replying to documents, taking notes, viewing participant information, creating and responding to polling questions, asking and answering questions and providing feedback on the pace and difficulty of the session. In particular, users may ask and answer questions either synchronously or asynchronously with a live session. When sending questions and answers, the user may use the same graphical user interface whether online (synchronous) or offline (asynchronously) and has the same user interaction experience. Additionally, users may send, receive and share files in a similar manner.

US 2013/0159822 A1 discloses a system and technique for capturing a workflow history and video of an electronic document. Events generated by an application while modifying an electronic document are stored on a web server as metadata. In addition, a captured digital image or frames of captured digital video that reflect the state of the document at the time the event was generated are also stored on the web server. The metadata is associated with one or more portions of the document and with the captured digital image or frames of captured digital video.

US 2013/0142332 A1 discloses a voice and screen capture archive and review process that enables a user to manage and evaluate customer service representative interactions with customers. An audio recording and a video recording of the computer screen of the customer service representative are captured and encrypted and merged together into a formatted file. The formatted file is stored on a storage server for access by the user. Through a web based API, the user can access the stored files and playback the interaction between the customer service representative and the customer for evaluation and training purposes.

Accordingly, there is a desire to enable recording of agent interactions with customers and other agents, in which various types of communications, activities, and interactions that occur during a screen recording session can be appropriately synchronized with the screen recording and in which navigation during playback is convenient and user friendly.

### SUMMARY

Aspects of embodiments of the present invention are directed to a system and method for recording agent interactions. More specifically, the present invention provides a system and a method as defined in the appended claims.

According to another aspect of the present disclosure, a system for recording agent interactions includes a processor; and a memory coupled to the processor, wherein the memory has stored thereon instructions that, when executed by the processor, cause the processor to: initiate a screen recording session on an electronic device; monitor for a media communication occurring on the electronic device; generate a metadata file corresponding to the media communication, wherein the metadata file comprises a start time of the media communication with respect to the screen recording session; display a user interface to display a video of the screen recording session, wherein the user interface includes a progress bar for the video; display a marker based on the metadata file along a location of the progress bar corresponding to the start time of the media communication; and navigate to a location of the video corresponding to the media communication in response to detecting a selection of the marker.

The instructions may further cause the processor to store a video file corresponding to the screen recording session in the memory.

The instructions may further cause the processor to: receive an audio communication during the screen recording session; and merge an audio file of the audio communication with the video file corresponding to the screen recording session, wherein the audio file and the video file are synchronized with a common clock.

The metadata file may further include a stop time of the media communication with respect to the screen recording session.

The instructions may further cause the processor to: receive an audio communication during the screen recording session; and generate a plurality of video files of the screen recording session, wherein the audio communication corresponds to one of the video files and spans an entire duration of the one of the video files.

The instructions may further cause the processor to: generate an image of the screen recording session corresponding to the media communication; and display the image in the user interface.

The metadata file may further include an identification of a type of the media communication.

The metadata file may further include profile information of an entity engaging in the media communication.

The instructions may further cause the processor to: receive a search query; compare the search query with information stored in the metadata file; and return a search result based on the comparison listing a video file corresponding to the search result.

The instructions may further cause the processor to: receive a selection based on the search result; and display the video in response to the selection based on the search result.

According to yet another aspect of the present disclosure, a method for recording agent interactions includes initiating, by a processor, a screen recording session on an electronic device; monitoring, by the processor, for a media communication occurring on the electronic device; generating, by the processor, a metadata file corresponding to the media communication, wherein the metadata file comprises a start time of the media communication with respect to the screen recording session; displaying, by the processor, a user interface to display a video of the screen recording session, wherein the user interface includes a progress bar for the video; displaying, by the processor, a marker based on the metadata file along a location of the progress bar corresponding to the start time of the media communication; and navigating, by the processor, to a location of the video corresponding to the media communication in response to detecting a selection of the marker.

The method may further include storing, by the processor, a video file corresponding to the screen recording session in a memory.

The method may further include receiving, by the processor, an audio communication during the screen recording session; and merging, by the processor, an audio file of the audio communication with the video file corresponding to the screen recording session, wherein the audio file and the video file are synchronized with a common clock.

The metadata file may further include a stop time of the media communication with respect to the screen recording session.

The method may further include receiving, by the processor, an audio communication during the screen recording session; and generating, by the processor, a plurality of video files of the screen recording session, wherein the audio communication corresponds to one of the video files and spans an entire duration of the one of the video files.

The method may further include generating, by the processor, an image of the screen recording session corresponding to the media communication; and displaying, by the processor, the image in the user interface.

The metadata file may further include an identification of a type of the media communication.

The metadata file may further include profile information of an entity engaging in the media communication.

The method may further include receiving, by the processor, a search query; comparing, by the processor, the search query with information stored in the metadata file; and returning, by the processor, a search result based on the comparison listing a video file corresponding to the search result.

The method may further include receiving, by the processor, a selection based on the search result; and displaying, by the processor, the video in response to the selection based on the search result.

According to still another aspect of the present disclosure, a system for recording agent interactions includes a processor; and a memory coupled to the processor, wherein the memory has stored thereon instructions that, when executed by the processor, cause the processor to: initiate a screen recording session on an electronic device; receive a plurality of media communications during the screen recording session; generate a plurality of images of the screen recording session, each of the images corresponding to one of the media communications; and display at least one of the images in a playback user interface.

The instructions may further cause the processor to display the images in an image gallery.

The images may include a segment of a video file corresponding to the screen recording session during the corresponding one of the media communications.

The instructions may further cause the processor to generate a metadata file corresponding to each of the media communications, wherein the metadata file comprises a start time of a corresponding one of the media communications.

The instructions may further cause the processor to: receive a search query; compare the search query with information stored in the metadata files; and return a search result based on the comparison listing a video file corresponding to the search result.

The metadata files may further include a stop time of the corresponding one of the media communications.

The metadata files may further include profile information of an entity engaging in the corresponding one of the media communications.

The instructions may further cause the processor to: display a playback progress bar corresponding to the screen recording session; and display a plurality of indicators each corresponding to one of the media communications along the playback progress bar.

The instructions may further cause the processor to receive a selection of one of the plurality of indicators, wherein the at least one of the images corresponds to the one of the plurality of indicators and is displayed in response to the selection.

The instructions may further cause the processor to: receive a selection to enlarge the at least one of the images; and display an enlarged version of the at least one of the images in response to the selection to enlarge the at least one of the images.

According another aspect of the present disclosure, a method for recording agent interactions includes initiating, by a processor, a screen recording session on an electronic device; receiving, by the processor, a plurality of media communications during the screen recording session; generating, by the processor, a plurality of images of the screen recording session, each of the images corresponding to one of the media communications; and displaying, by the processor, at least one of the images in a playback user interface.

The method may further include displaying, by the processor, the images in an image gallery.

The images may include a segment of a video file corresponding to the screen recording session during the corresponding one of the media communications.

The method may further include generating, by the processor, a metadata file corresponding to each of the media communications, wherein the metadata file comprises a start time of a corresponding one of the media communications.

The method may further include receiving, by the processor, a search query; comparing, by the processor, the search query with information stored in the metadata files; and returning, by the processor, a search result based on the comparison listing a video file corresponding to the search result.

The metadata files may further include a stop time of the corresponding one of the media communications.

The metadata files may further include profile information of an entity engaging in the corresponding one of the media communications.

The method may further include displaying, by the processor, a playback progress bar corresponding to the screen recording session; and displaying, by the processor, a plurality of indicators each corresponding to one of the media communications along the playback progress bar.

The method may further include receiving, by the processor, a selection of one of the plurality of indicators, wherein the at least one of the images corresponds to the one of the plurality of indicators and is displayed in response to the selection.

The method may further include receiving, by the processor, a selection to enlarge the at least one of the images; and displaying, by the processor, an enlarged version of the at least one of the images in response to the selection to enlarge the at least one of the images.

According to another aspect of the present disclosure, a system for recording agent interactions includes a processor; and a memory coupled to the processor, wherein the memory has stored thereon instructions that, when executed by the processor, cause the processor to: initiate a screen recording session on an electronic device; monitor for a media communication occurring on the electronic device; generate a metadata file corresponding to the media communication, wherein the metadata file comprises a start time of the media communication with respect to the screen recording session; display a user interface to display a video of the screen recording session, wherein the user interface includes a progress bar for the video; display a marker based on the metadata file along a location of the progress bar corresponding to the start time of the media communication; and navigate to a location of the video corresponding to the media communication in response to detecting a selection of the marker.

The instructions may further cause the processor to store a video file corresponding to the screen recording session in the memory.

The instructions may further cause the processor to: receive an audio communication during the screen recording session; and merge an audio file of the audio communication with the video file corresponding to the screen recording session, wherein the audio file and the video file are synchronized with a common clock.

The metadata file may further include a stop time of the media communication with respect to the screen recording session.

The instructions may further cause the processor to: receive an audio communication during the screen recording session; and generate a plurality of video files of the screen recording session, wherein the audio communication corresponds to one of the video files and spans an entire duration of the one of the video files.

The instructions may further cause the processor to: generate an image of the screen recording session corresponding to the media communication; and display the image in the user interface.

The metadata file may further include an identification of a type of the media communication.

The metadata file may further include profile information of an entity engaging in the media communication.

The instructions may further cause the processor to: receive a search query; compare the search query with information stored in the metadata file; and return a search result based on the comparison listing a video file corresponding to the search result.

The instructions may further cause the processor to: receive a selection based on the search result; and display the video in response to the selection based on the search result.

According another aspect of the present disclosure, a method for recording agent interactions includes initiating, by a processor, a screen recording session on an electronic device; monitoring, by the processor, for a media communication occurring on the electronic device; generating, by the processor, a metadata file corresponding to the media communication, wherein the metadata file comprises a start time of the media communication with respect to the screen recording session; displaying, by the processor, a user interface to display a video of the screen recording session, wherein the user interface includes a progress bar for the video; displaying, by the processor, a marker based on the metadata file along a location of the progress bar corresponding to the start time of the media communication; and navigating, by the processor, to a location of the video corresponding to the media communication in response to detecting a selection of the marker.

The method may further include storing, by the processor, a video file corresponding to the screen recording session in a memory.

The method may further include receiving, by the processor, an audio communication during the screen recording session; and merging, by the processor, an audio file of the audio communication with the video file corresponding to the screen recording session, wherein the audio file and the video file are synchronized with a common clock.

The metadata file may further include a stop time of the media communication with respect to the screen recording session.

The method may further include receiving, by the processor, an audio communication during the screen recording session; and generating, by the processor, a plurality of video files of the screen recording session, wherein the audio communication corresponds to one of the video files and spans an entire duration of the one of the video files.

The method may further include generating, by the processor, an image of the screen recording session corresponding to the media communication; and displaying, by the processor, the image in the user interface.

The metadata file may further include an identification of a type of the media communication.

The metadata file may further include profile information of an entity engaging in the media communication.

The method may further include receiving, by the processor, a search query; comparing, by the processor, the search query with information stored in the metadata file; and returning, by the processor, a search result based on the comparison listing a video file corresponding to the search result.

The method may further include receiving, by the processor, a selection based on the search result; and displaying, by the processor, the video in response to the selection based on the search result.

According to another aspect of the present disclosure, a system for recording agent interactions includes a processor; and a memory coupled to the processor, wherein the memory has stored thereon instructions that, when executed by the processor, cause the processor to: initiate a screen recording session on an electronic device; receive a plurality of media communications during the screen recording session; generate a plurality of images of the screen recording session, each of the images corresponding to one of the media communications; and display at least one of the images in a playback user interface.

The instructions may further cause the processor to display the images in an image gallery.

The images may include a segment of a video file corresponding to the screen recording session during the corresponding one of the media communications.

The instructions may further cause the processor to generate a metadata file corresponding to each of the media communications, wherein the metadata file comprises a start time of a corresponding one of the media communications.

The instructions may further cause the processor to: receive a search query; compare the search query with information stored in the metadata files; and return a search result based on the comparison listing a video file corresponding to the search result.

The metadata files may further include a stop time of the corresponding one of the media communications.

The metadata files may further include profile information of an entity engaging in the corresponding one of the media communications.

The instructions may further cause the processor to: display a playback progress bar corresponding to the screen recording session; and display a plurality of indicators each corresponding to one of the media communications along the playback progress bar.

The instructions may further cause the processor to receive a selection of one of the plurality of indicators, wherein the at least one of the images corresponds to the one of the plurality of indicators and is displayed in response to the selection.

The instructions may further cause the processor to: receive a selection to enlarge the at least one of the images; and display an enlarged version of the at least one of the images in response to the selection to enlarge the at least one of the images.

According to another aspect of the present disclosure, a method for recording agent interactions includes initiating, by a processor, a screen recording session on an electronic device; receiving, by the processor, a plurality of media communications during the screen recording session; generating, by the processor, a plurality of images of the screen recording session, each of the images corresponding to one of the media communications; and displaying, by the processor, at least one of the images in a playback user interface.

The method may further include displaying, by the processor, the images in an image gallery.

The images may include a segment of a video file corresponding to the screen recording session during the corresponding one of the media communications.

The method may further include generating, by the processor, a metadata file corresponding to each of the media communications, wherein the metadata file comprises a start time of a corresponding one of the media communications.

The method may further include receiving, by the processor, a search query; comparing, by the processor, the search query with information stored in the metadata files; and returning, by the processor, a search result based on the comparison listing a video file corresponding to the search result.

The metadata files may further include a stop time of the corresponding one of the media communications.

The metadata files may further include profile information of an entity engaging in the corresponding one of the media communications.

The method may further include displaying, by the processor, a playback progress bar corresponding to the screen recording session; and displaying, by the processor, a plurality of indicators each corresponding to one of the media communications along the playback progress bar.

The method may further include receiving, by the processor, a selection of one of the plurality of indicators, wherein the at least one of the images corresponds to the one of the plurality of indicators and is displayed in response to the selection.

The method may further include receiving, by the processor, a selection to enlarge the at least one of the images; and displaying, by the processor, an enlarged version of the at least one of the images in response to the selection to enlarge the at least one of the images.

### BRIEF DESCRIPTION OF THE DRAWINGS

The patent or application file contains at least one drawing executed in color. Copies of this patent or patent application publication with color drawings will be provided by the Office upon request and payment of the necessary fee.

A more complete appreciation of the present invention, and many of the attendant features and aspects thereof, will become more readily apparent as the invention becomes better understood by reference to the following detailed description when considered in conjunction with the accompanying drawings in which like reference symbols indicate like components, wherein:
FIG. 1 is a schematic block diagram of an agent interaction recording system according to some embodiments of the present invention;
FIG. 2 is a schematic block diagram illustrating further details of an interaction recording system according to some embodiments of the present invention;
FIG. 3 is a signaling flow diagram illustrating communications to initiate and conduct a screen recording session according to some embodiments of the present invention;
FIG. 4 is a signaling flow diagram illustrating communications for initiating and conducting a recording session and storing information regarding media communication events during a screen recording session according to some embodiments of the present invention;
FIGs. 5A-5D illustrate examples of media communications being mapped to screen recording files according to some embodiments of the present invention;
FIG. 6 is a signaling flow diagram illustrating communications for searching and retrieving recordings according to some embodiments of the present invention;
FIGs. 7A-7F illustrate a playback and search user interface for searching and playing recording sessions according to some embodiments of the present invention; and
FIG. 8 illustrates a flow chart for navigating to a location of a video based on a selection of a marker according to some embodiments of the present invention.

### DETAILED DESCRIPTION

The present invention is described in one or more embodiments in the following description with reference to the figures, in which like numerals represent the same or similar elements. While the invention is described in terms of the best mode for achieving the invention's objectives,
the invention is defined by the appended claims.

In general terms, embodiments of the present invention are directed to a system and method for recording agent interactions, for example, in a call center environment.

Businesses often utilize agents operating agent devices such as desktop computers and telephone systems to engage in communication sessions or interactions with customers or other agents in order to service customer needs. One example is a contact center operating on behalf of a business, in which customers may initiate (or receive) a communication with a contact center agent to order products, resolve complaints, upgrade or change services, or otherwise resolve issues related to the products or services offered by the business.

Supervising agents of the business or contact center may wish to monitor such communications, for example, to ensure high quality interactions, evaluate the performance of agents, or train new agents for performing their duties. In some instances, a contact center or business may wish to evaluate or analyze activities of individual agents or groups of agents according to certain parameters. For example, the contact center or business may wish to study or analyze information about communication events related to a particular topic (e.g., shipping complaints, complaints about specific products, attempts to sell certain services, etc.). To enable easier analysis of such communication events, audio data (e.g., telephony communication audio) or text data (e.g., email or chat communications) may be analyzed using speech recognition and analysis techniques to determine the occurrence of various topics of communication. Additionally, agent activities may be recorded as a screen capture recording that can later be played back to review what an agent was doing during the course of the agent's work shift, or during the course of a specific media communication session.

In many scenarios, an individual agent may be communicating with multiple customers and other agents simultaneously during the course of a given work session. For example, an agent may engage in multiple text chat communications with different customers, while simultaneously engaging in a telephony communication with another customer and reviewing email correspondence with another agent. If the agent's screen is recorded during the course of a work shift, such a recording may span several hours and therefore it may be difficult for a supervising agent to subsequently review the substance of an individual media communication (e.g., a chat session) without reviewing long segments of unrelated screen recording video.

Accordingly, embodiments of the present invention enable information about individual media communication events or other agent activities to be recorded and stored in a way that is searchable for subsequent playback, thereby enabling easier navigation to and analysis of relevant portions of screen recording sessions. Further, embodiments of the present invention enable easier analysis of multiple media communication events or agent activities among multiple agents or regarding the activities of a single agent.

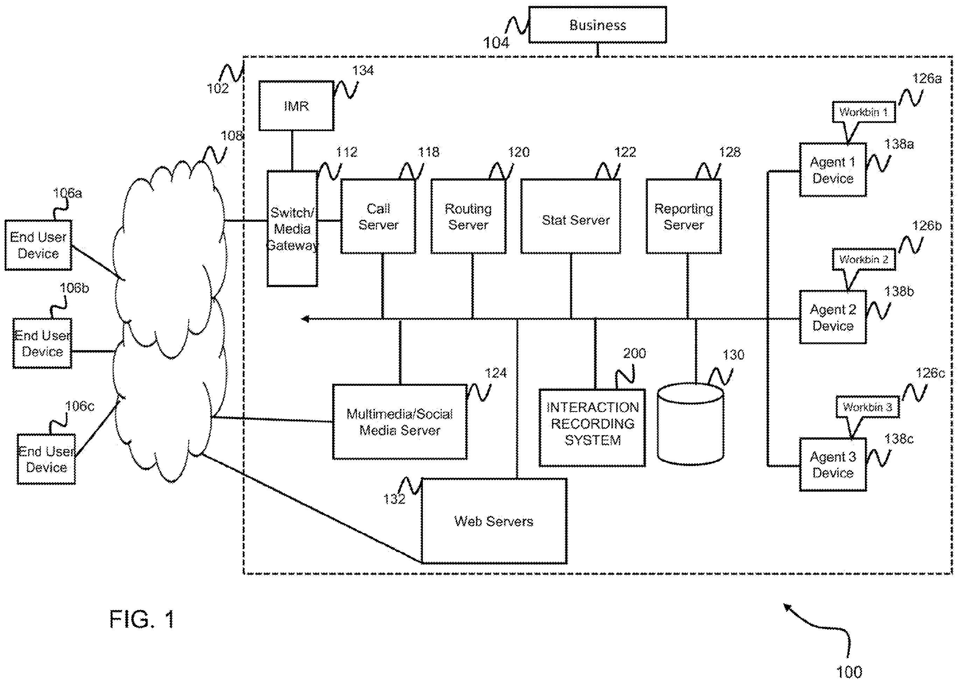

FIG. 1 is a schematic block diagram of an agent interaction recording system 100 according to some embodiments of the present invention. The agent interaction recording system 100 may operate, for example, in a call or contact center 102 operated by business (e.g., a retail or service provider) offering certain product lines or services to customers operating in the commerce system. The business 104 may operate the contact center 102 to provide contact center services in furtherance of its business objectives. The contact center 102 may be an in-house facility to a business or corporation for serving the enterprise in performing the functions of sales and service relative to the products and services available through the enterprise. In another aspect, the contact center may be a third-party service provider. The contact center may be deployed in equipment dedicated to the enterprise or third-party service provider, and/or deployed in a remote computing environment such as, for example, a private or public cloud environment with infrastructure for supporting multiple contact centers for multiple enterprises. The various components of the contact center may also be distributed across various geographic locations and computing environments and not necessarily contained in a single location, computing environment, or even computing device.

According to one exemplary embodiment, the contact center includes resources (e.g. personnel, computers, and telecommunication equipment) to enable delivery of services via telephone or other communication mechanisms. Such services may vary depending on the type of contact center, and may range from customer service to help desk, emergency response, telemarketing, order taking, and the like.

Customers, potential customers, or other end users desiring to receive services from the contact center 102 or the business 104 may initiate an inbound communication to the contact center 102 via their end user devices 106a-106c (collectively referenced as electronic device 106). The electronic device 106 may be a communication device conventional in the art, such as, for example, a telephone, wireless phone, smart phone, personal computer, electronic tablet, and/or the like. Users operating the electronic device 106 may initiate, manage, and respond to telephone calls, emails, chats, text messaging, web-browsing sessions, and other multi-media transactions.

Inbound and outbound communications from and to the electronic device 106 may traverse the telephone, cellular, and/or data communication network 108 depending on the type of device that is being used. For example, the communications network 108 may include a private or public switched telephone network (PSTN), local area network (LAN), private wide area network (WAN), and/or public wide area network such as, for example, the Internet. The communications network 108 may also include a wireless carrier network including a code division multiple access (CDMA) network, global system for mobile communications (GSM) network, and/or any 3G or 4G network conventional in the art.

According to one exemplary embodiment, the contact center 102 includes a switch/media gateway 112 coupled to the communications network 108 for receiving and transmitting communications between end users and the contact center 102. The switch/media gateway 112 may include a telephony switch or communication switch configured to function as a central switch for agent level routing within the center. In this regard, the switch 112 may include an automatic call distributor, a private branch exchange (PBX), an IP-based software switch, and/or any other switch configured to receive Internet-sourced calls and/or telephone network-sourced calls. According to one exemplary embodiment of the invention, the switch is coupled to a communication server 118 which may, for example, serve as an adapter or interface between the switch and the remainder of the routing, monitoring, and other communication-handling components of the contact center.

The contact center may also include a multimedia/social media server for engaging in media interactions other than voice interactions with the end user devices 106 and/or web servers 132. The media interactions may be related, for example, to email, vmail (voice mail through email), chat, video, text-messaging, web, social media, co-browsing, and the like. The web servers 132 may include, for example, social interaction site hosts for a variety of known social interaction sites to which an end user may subscribe, such as, for example, Facebook, Twitter, and the like. The web servers may also provide web pages for the enterprise that is being supported by the contact center. End users may browse the web pages and get information about the enterprise's products and services. The web pages may also provide a mechanism for contacting the contact center, via, for example, web chat, voice call, email, web real time communication (WebRTC), or the like.

According to one exemplary embodiment of the invention, the switch 112 is coupled to an interactive media response (IMR) server 134, which may also be referred to as a self-help system, virtual assistant, or the like. The IMR server 134 may be similar to an interactive voice response (IVR) server, except that the IMR server 134 is not restricted to voice, but may cover a variety of media channels including voice. Taking voice as an example, however, the IMR server may be configured with an IMR script for querying customers on their needs. For example, a contact center for a bank may tell customers, via the IMR script, to "press 1" if they wish to get an account balance. If this is the case, through continued interaction with the IMR server 134, customers may complete service without needing to speak with an agent. The IMR server 134 may also ask an open ended question such as, for example, "How can I help you?" and the customer may speak or otherwise enter a reason for contacting the contact center. The customer's response may then be used by the routing server 120 to route the call or communication to an appropriate contact center 102 resource.

If the communication is to be routed to an agent, the communication may be forwarded to the communication server 118 which interacts with a routing server 120 for finding an appropriate agent for processing the communication. The communication server 118 may be configured to process PSTN calls, VoIP calls, and the like, or other text or non-audio based communications (e.g., chat sessions). For example, the communication server 118 may include a session initiation protocol (SIP) server for processing SIP calls. According to some exemplary embodiments, the communication server 118 may, for example, extract data about the customer interaction such as the customer's telephone number, often known as the automatic number identification (ANI) number, or the customer's internet protocol (IP) address, or email address.

In some embodiments, the routing server 120 may query a customer database, which stores information about existing clients, such as contact information, service level agreement (SLA) requirements, nature of previous customer contacts and actions taken by contact center to resolve any customer issues, and the like. The database may be managed by any database management system conventional in the art, such as Oracle, IBM DB2, Microsoft SQL server, Microsoft Access, PostgreSQL, MySQL, FoxPro, and SQLite, and may be stored in a mass storage device 130. The routing server 120 may query the customer information from the customer database via an ANI or any other information collected by the IMR 134 and forwarded to the routing server by the communication server 118.

Once an appropriate agent is available to handle a communication, a connection is made between the customer and the agent device 138a-138c (collectively referenced as 138) of the identified agent. Collected information about the customer and/or the customer's historical information may also be provided to the agent device for aiding the agent in better servicing the communication. In this regard, each agent device 138 may include a telephone adapted for regular telephone calls, VoIP calls, and the like. The agent device 138 may also include a computer for communicating with one or more servers of the contact center and performing data processing associated with contact center operations, and for interfacing with customers via voice and other multimedia communication mechanisms.

The selection of an appropriate agent for routing an inbound communication may be based, for example, on a routing strategy employed by the routing server 120, and further based on information about agent availability, skills, and other routing parameters provided, for example, by a statistics server 122.

The contact center 102 may also include a reporting server 128 configured to generate reports from data aggregated by the statistics server 122. Such reports may include near real-time reports or historical reports concerning the state of resources, such as, for example, average waiting time, abandonment rate, agent occupancy, and the like. The reports may be generated automatically or in response to specific requests from a requestor (e.g. agent/administrator, contact center application, and/or the like).

According to one example embodiment of the invention, the routing server 120 is enhanced with functionality for managing back-office/offline activities that are assigned to the agents. Such activities may include, for example, responding to emails, responding to letters, attending training seminars, or any other activity that does not entail real time communication with a customer. Once assigned to an agent, an activity may be pushed to the agent, or may appear in the agent's workbin 126a-126c (collectively referenced as 126) as a task to be completed by the agent. The agent's workbin may be implemented via any data structure conventional in the art, such as, for example, a linked list, array, and/or the like. The workbin may be maintained, for example, in buffer memory of each agent device 138.

According to one exemplary embodiment of the invention, the mass storage device(s) 130 may store one or more databases relating to agent data (e.g. agent profiles, schedules, etc.), customer data (e.g. customer profiles), interaction data (e.g. details of each interaction with a customer, including reason for the interaction, disposition data, time on hold, handle time, etc.), and the like. According to one embodiment, some of the data (e.g. customer profile data) may be provided by a third party database such as, for example, a third party customer relations management (CRM) database. The mass storage device 130 may take form of a hard disk or disk array as is conventional in the art.

The contact center 102 may additionally include an interaction recording system 200, described in more detail below, for recording and facilitating playback of interactions between customers operating the end user devices 106a-106c and agents operating agent devices 138a-138c.

The various servers of the agent interaction recording system 100, including those operated by the contact center 102 shown in FIG. 1, may each include one or more processors executing computer program instructions and interacting with other system components for performing the various functionalities described herein. The computer program instructions are stored in a memory implemented using a standard memory device, such as, for example, a random access memory (RAM). The computer program instructions may also be stored in other non-transitory computer readable media such as, for example, a CD-ROM, flash drive, or the like. Also, although the functionality of each of the servers is described as being provided by the particular server, a person of skill in the art should recognize that the functionality of various servers may be combined or integrated into a single server, or the functionality of a particular server may be distributed across one or more other servers without departing from the scope of the embodiments of the present invention.

In the various embodiments, the terms interaction and communication are used generally to refer to any real-time and non-real time interaction that uses any communication channel including, without limitation telephony calls (PSTN or VoIP calls), emails, vmails (voice mail through email), video, chat, screen-sharing, text messages, social media messages, web real-time communication (e.g. WebRTC calls), and the like.

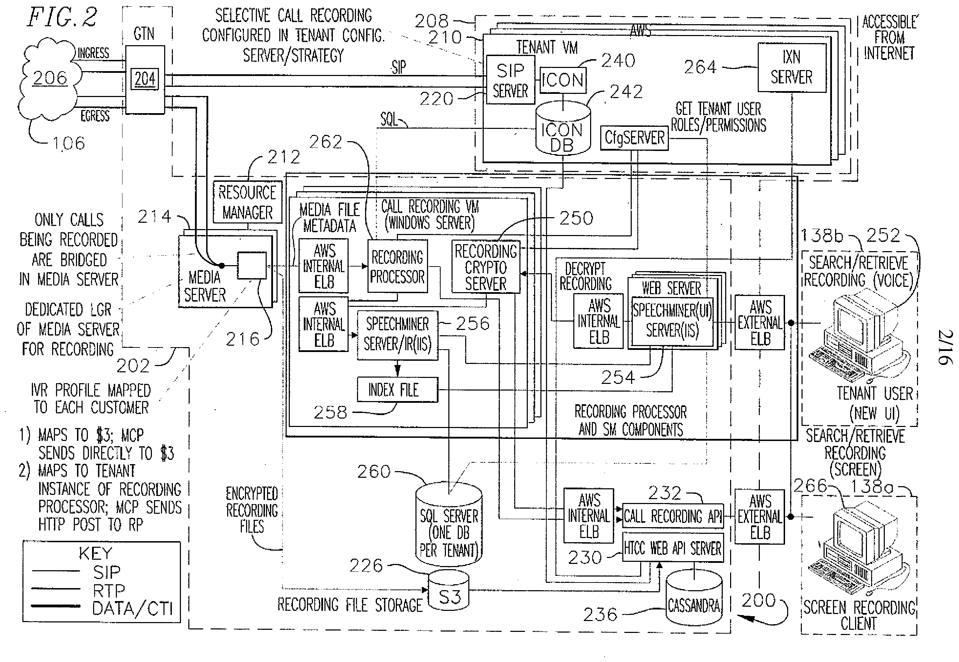

FIG. 2 illustrates further detail of an interaction recording system 200, for example, as part of a call center 102 as shown in FIG. 1. That is, one or more of the functions of the interaction recording system 200 may be performed by elements described with respect to FIG. 1. The interaction recording system 200 includes a remote operations environment 202 with an edge device 204 for routing calls between customers that utilize a service provider 206 (e.g., a telephony service provider (TSP), an internet service provider (ISP), or communication network 108 shown in FIG. 1), and contact center resources in a contact center premise 208. The edge device 204 may be a session border controller conventional in the art.

The contact center premise 208 may include some or all of the components/appliances shown with respect to the contact center 102 shown in FIG. 1. For example, the appliances may include a telephony/SIP server, routing server, statistics server, agent devices (e.g. telephones, desktops, etc.), and/or other controllers typical for rendering contact center services for the particular contact center. The appliances may be located locally within the contact center premise 208, thereby enabling the contact center to retain control of such appliances.

The remote operations environment 202 may be a cloud operations environment that utilizes servers and other types of controllers, and is coupled to premises contact centers (e.g., contact center premise 208 and/or contact center 102) over a wide area network. Contact center services from the remote operations environment may be provided by a cloud service provider on behalf of multiple contact centers (also referred to as tenants) as a software as a service (SaaS), over the wide area network. The tenants may own their own infrastructure for providing some of the contact center services. The infrastructure and capabilities at the tenant premises may differ from the infrastructure and capabilities in the remote operations environment. According to one embodiment, the premise contact center may be operated by enterprise operations team while the remote operations environment may be operated by an operations team outside of the enterprise.

The remote operations environment 202 is configured to provide a point of presence for connection to various telephony service providers. According to one embodiment, media traffic transmitted using a Real-time Transport Protocol (RTP) terminates in the remote operations environment. The remote operations environment may provide a guaranteed quality of service (QoS) for the media traffic. In another embodiment, no QoS guarantees are provided for the media traffic traversing the remote operations environment 202.

The remote operations environment 202 may also be coupled to other public operations environments (e.g. public cloud computing environments), and some processing may be distributed to the other remote operations environments as will be apparent to a person of skill in the art. For example, processing intelligence and media handling that do not require QoS may be distributed to the other remote operations environments on behalf of one or more tenants. For example, the public operations environment may host a virtual machine dedicated to each tenant with a SIP server, routing service, and the like, for handling inbound and outbound voice contacts.

According to one environment, the edge device 204 of the remote operations environment 202 is configured to control signaling and media streams involved in setting up, conducting, and tearing down voice conversations and other media communications between, for example, a customer and a contact center agent. According to one embodiment, the edge device 20 is a session border controller controlling the signaling and media exchanged during a media session (also referred to as a "call," "telephony call," or "communication session") between the customer and the agent. According to one embodiment, the signaling exchanged during a media session includes SIP, H.323, Media Gateway Control Protocol (MGCP), and/or any other voice-over IP (VoIP) call signaling protocols conventional in the art. The media exchanged during a media session includes media streams which carry the call's audio, video, or other data along with information of call statistics and quality.

According to one embodiment, the edge device 204 operates according to a standard SIP back-to-back user agent (B2BUA) configuration. In this regard, the edge device 204 is inserted in the signaling and media paths established between a calling and called parties in a VoIP call. In the below embodiments, it should be understood that other intermediary software and/or hardware devices may be invoked in establishing the signaling and/or media paths between the calling and called parties.

The remote operations environment 200 hosts a resource manager 212, media control platform 214, and recording server 216 (which may be incorporated into the media control platform 214). The resource manager 212 and media control platform 214 may collectively be referred to as a media controller. The resource manager 212 is configured to allocate and monitor a pool of media control platforms for providing load balancing and high availability for each resource type. According to one embodiment, the resource manager 212 monitors and selects a media control platform 214 from a cluster of available platforms. The selection of the media control platform 214 may be dynamic, for example, based on identification of a location of a calling customer, type of media services to be rendered, a detected quality of a current media service, and the like.

According to one embodiment, the resource manager is configured to process requests for media services, and interact with, for example, a configuration server having a configuration database, to determine an interactive voice response (IVR) profile, voice application (e.g. Voice Extensible Markup Language (Voice XML) application), announcement, and conference application, resource, and service profile that can deliver the service, such as, for example, a media control platform. According to one embodiment, the resource manager may provide hierarchical multi-tenant configurations for service providers, enabling them to apportion a select number of resources for each tenant.

The media control platform 214 is configured to provide call and media services upon request from a service user. Such services, include, without limitation, initiating outbound calls, playing music or providing other media while a call is placed on hold, call recording, conferencing, call progress detection, playing audio/video prompts during a customer self-service session, and the like. One or more of the services are defined by voice applications (e.g. VoiceXML applications) that are executed as part of the process of establishing a media session between the media control platform and the service user.

The resource manager 212 is configured to identify the appropriate media control platform 214 instance from a cluster of media control platform instances based on the IVR profile, load balancing considerations, and the like, and forward a request to the identified media control platform. In forwarding the request, the resource manager is configured to insert additional headers or parameters as specified by the service requirements, service parameters, and polices that have been configured for the IVR profile.

According to one embodiment, the media control platform 214 includes an interpreter module for interpreting and executing the voice application. In some embodiments, the media control platform, through the resource manager 212, may invoke additional services such as, for example, automatic speech recognition or text-to-speech services, from a speech server.

The recording server 216 is configured to record media exchanged during a media session. Although the recording server 216 is depicted as a separate component, a person of ordinary skill in the art should recognize that functionality of the recording server 216 may be incorporated into the media control platform 214.

According to one environment, the contact center premise 208 hosts a SIP server 220, which may be similar to the contact server 118 described with respect to FIG. 1, to initiate a call recording of a call established between the end user device 106 and an agent device, via the media control platform 214 in the remote operations environment 202. In response to a request for recording services, the media control platform 214 performs media bridging between the end user device 106 and the agent device 138, and initiates a recording session. The media control platform 214 replicates the media sent between the end user device 106 and the agent device 138, and streams the replicated media to the recording server 216 which then proceeds to store the replicated media in a local and/or remote storage device (not shown). The local storage device may be, for example, a short term storage mechanism that can include a solid state drive to provide fast write throughput, or a disk storage mechanism (e.g. disk array), in the remote operations environment 202 that may be scaled for the cluster of media control platforms in the remote operations environment. The remote storage device may be hosted, for example, in an environment (e.g. a public cloud computing environment) separate from the remote operations environment 202. According to one embodiment, the storage devices store media recordings for a plurality of tenants, in a safe and secure manner. In this regard, the recordings are stored in the storage devices in an encrypted manner (e.g. via a public key), which is configured to be decrypted (e.g. for listening) by the tenant who may own, for example, a private key.

The contact center premise 208 hosts a Session Initiation Protocol (SIP) server 220 in communication with the resource manager 212 over a wide area network for signaling the media control platform 214 to record media transmitted between an agent device 138 and a customer (or customer-operated device 106, via the service provider 206).

The system of FIG. 2 further includes a mass storage device 226 configured to store recordings transmitted by the recording server 216. The mass storage device 226 may be, for example, an online storage in a public cloud computing environment offered, for example, by a third party cloud-based data storage service (e.g., Amazon ® S3 online storage web service). The mass storage device 226 may also be a local storage device at the contact center premise 208.

According to one embodiment, recordings of communications between agents and customers may be encrypted by the media control platform 214 prior to posting into a bucket associated with the tenant or agent device 138 for which recordings are being stored. The encryption of recordings may be via an encryption key stored in an interactive-voice-response (IVR) profile associated with the tenant or agent device 138. An authorization key for posting in the mass storage device may also be obtained, as necessary, from the tenant's IVR profile.

According to one embodiment, the remote control environment 200 further hosts a web server 230 providing a call recording application programming interface (API) 232 for interfacing with the media control platform 214. According to one embodiment, the media control platform 214 uses the API 232 to post media communication metadata for a recorded media communication (e.g., voice call, chat, email, etc.), including a universal resource identifier (URI) or any other link to the recording stored in the mass storage device 226. The media communication metadata may be stored in the mass storage device 226, or in a separate mass storage device 236 similar to the mass storage device 226.

The contact center premise 208 may host a server providing an interaction concentrator (ICON) application 240 coupled to an ICON database 242. According to one embodiment, the ICON application 240 receives call and other interaction event details from the SIP server 220 and stores the details in the ICON database 242. The web server 230 is configured to access the ICON database 242 over a wide area network and retrieve event details associated with the communication metadata received from the media control platform 214, and store the event details and associated communication metadata in a communication record maintained in the mass storage device 226 or mass storage device 236. In another embodiment, the web server 230 may communicate with the ICON database 242 through the recording processor 262, operating as an intermediary to merge call events between the web server 230 and the ICON database 242.

The remote control environment further hosts a recording server 250. The recording server 260 may operate in part to perform key management for encryption and decryption of communication recordings. In this regard, the recording server 250 provides a user interface for access by administrators (e.g., a tenant administrator operating an agent terminal 138b) for uploading and managing certificates for the encryption and decryption of the communication recordings. The recording server 250 may be deployed in the remote operations environment 202 (or another remote environment) or at the contact center premise 208.

In one embodiment, a graphical user interface 252 for accessing the communication recordings is integrated into a tenant user interface operating at an agent terminal 138b. The graphical user interface 252 accesses a playback user interface 254 providing prompts and other mechanisms for allowing a user to search, playback, and perform other actions (e.g. searches for key words or phrases) relating to recorded communications.

The playback user interface 254 accesses a speech server 256 to invoke various functionalities of the speech server 256. The speech server 256 is configured with speech recognition technology to provide automatic speech recognition and text-to-speech functionality for use in voice applications, and may provide various speech analytics and text processing functionalities as will be understood by a person of skill in the art. Upon performing speech analytics and text processing operations on communications, the speech server 256 may store information about the communication (e.g., topics, keywords, agent and customer information, media type, media identification information, etc,) in an index file 258 to facilitate searching operations by the playback user interface 254. Additionally, information about communications may be stored in a searchable database operating on a database server (e.g., an SQL server) 260, accessible by the speech server 256 and the playback user interface 254.

Part of the processing by the web server 230 may be called out and handled by a separate recording processor 262. Specifically, the recording processor 262 may execute instructions to access the ICON database 242, to retrieve event details associated with the call metadata received from the media control platform 214, and to forward the event details and associated call metadata to the web server 230 for storing in a call record maintained in the call database 236. According to one embodiment, the recording processor 262 may be process or thread running in the same or separate processor or computing device as the web server 230.

According to embodiments of the present invention, the interaction recording system 200 enables monitoring of communication events between end user devices and agent terminals 138. Communications are recorded and stored, along with metadata about the communications, in a mass storage device (e.g., 226 or 236), for subsequent retrieval and analysis. Additionally, speech processing and analytics is performed on communications to enable a tenant user operating an agent terminal (e.g., 138b) to subsequently search and playback recorded communications.

The interaction recording system 200 further includes an interaction server 264, which may be located in the contact center premise 208, or remotely in the remote operations environment 202. The interaction server 264 is in communication with the web server 230, and operates to facilitate electronic communication services such as email, chat, and social media communication events. The web server 230 communicates with the interaction server 264 to determine agent state in order to facilitate recording of agent screens using a screen recording client 266 operating on agent terminals 138. In particular, when an agent terminal 138 logs in or connects to the web server 230, and is authenticated as an agent, the interaction server 264 operates with the web server 230 to instruct the web server 230 as to when to start, stop, pause, or resume recording an agent screen of the agent terminal 138. In another embodiment, individual agents may use a browser interface to conduct their duties, such that a screen recording client 266 is not installed as a separate software application running on the agent's screen, and instead the agent uses a web browser-based workspace user interface (e.g., using web real-time communication (WebRTC), or other suitable browser-based communication platforms) to interact with other agents, customers, etc., and the web server 230 interacts with the interaction server 264 to record the activities of the agent in the browser interface.

As will be explained in more detail below, when an agent screen is recorded using the screen recording client 266, the screen recording client 266 and/or the web server 230 monitor various communications occurring on the agent terminal 138, and record information regarding the communications (e.g., start time, end time, media identification, media duration, media type, etc.) as metadata information to store in metadata files in the mass storage device 236. Collectively, therefore, the components of the interaction recording system 200 enable communications that occur during a screen recording session to be identified, thereby enabling subsequent searching and retrieval of relevant communications by a tenant user (e.g., operating the agent terminal 138b).

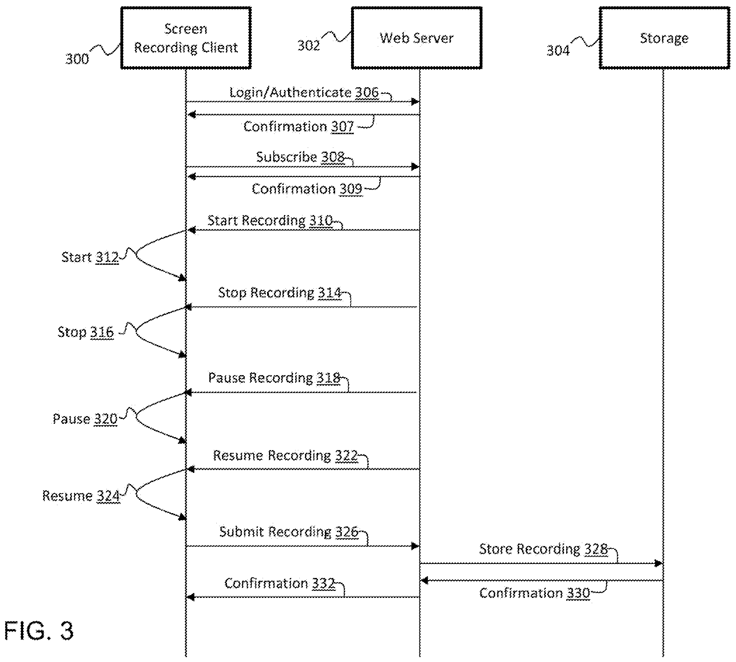

FIG. 3 is a signaling flow diagram illustrating various interactions between a screen recording client 300, a web server 302, and the mass storage device 304 to initiate and conduct a screen recording session according to one embodiment of the invention. The numbering and arrangement of the operations shown in the flow diagrams described according to embodiments of the present invention does not imply that the operations must occur in every instance, or that the operations must be performed in a particular order, unless noted in the description of the flow diagram. For example, some operations disclosed with respect to the example embodiments may not be performed depending on the design and function of the agent interaction recording system.

Referring to FIG. 3, an instance of the screen recording client 300 is running on an end user device or agent terminal (e.g., agent device 138), and is in communication with the web server 302, which may be the same as or similar to the web server 230 shown in FIG. 2. The web server is further in communication with the mass storage device 304, which may be the same as or similar to the mass storage devices 226 in FIG. 2.

In operation 306, an agent device 138 connects with or logs into the web server 302 using the screen recording client 300. The screen recording client 300 may run silently on the agent device 138, and may automatically initiate connection or login to the web server 302 when the agent operating the agent device 138 begins interacting with the agent device 138, or when the agent logs into the agent device 138 to begin a shift.

In operation 307, the web server 302 provides a confirmation message to the screen recording client 300 that the screen recording client is logged into the web server 302 and properly authenticated to conduct screen recording when directed by the web server.

In operation 308, the screen recording client 300 sends a subscription request to the web server 302, to request updated settings, or other information and parameters necessary to conduct screen recording. The web server 302 responds with a confirmation message and any necessary information in operation 309.

The web server 302 then monitors the status of the end user device operating the screen recording client 300, and instructs the screen recording client 300 regarding whether to record the screen (including non-voice communications) occurring on the end user device during a work shift of the agent operating the end user device.

For example, in operation 310, the web server 302 instructs the screen recording client 300 to start recording depending on the occurrence of various start recording trigger events (e.g., the agent logging in to his or her work station, the agent setting a "Do Not Disturb" setting to off, or when an event from a list of pre-defined types of media communications occurs or are set to ready). In operation 312, the screen recording client 300 begins recording the screen of the end user device as the agent conducts various types of communications with customers, or otherwise performs their duties, for example, as part of a contact center environment. Any suitable technology used to grab and record content displayed on a computer screen may be used. The recording captures all or part of the screen of the end user device, and stores the screen capture as one or more video or image files as will be discussed in more detail below.

In operation 314, the web server 302 instructs the screen recording client 300 to stop recording depending on the occurrence of various stop recording trigger events (e.g., the agent logging off his or her work station, the agent setting a "Do Not Disturb" setting to on, or when an event from a list of pre-defined types of media communications does not occur or are set to not ready). In operation 314, the screen recording client 300 stops recording the screen of the end user device operated by the agent.

In operation 318, the web server 302 instructs the screen recording client 300 to pause recording depending on the occurrence of various pause recording trigger events (e.g., the agent logging off his or her work station, the agent setting a "Do Not Disturb" setting to on, or when an event from a list of pre-defined types of media communications does not occur or are set to not ready). The pause recording or stop recording instruction may occur depending on the design and customized settings of the agent communication recording system. In operation 320, the screen recording client 300 pauses recording the screen of the end user device operated by the agent.

In operation 322, the web server 302 instructs the screen recording client 300 to resume recording depending on the occurrence of various resume recording trigger events (e.g., the agent logging back into his or her work station, the agent setting a "Do Not Disturb" setting to off, or when a list of pre-defined types of media communications occurs or are set to ready) after the recording has been paused. In operation 324, the screen recording client 300 resumes recording the screen of the end user device operated by the agent.

Upon completion of a screen recording (e.g., at the end of an agent shift or when a stop recording instruction has been received), in operation 326, the screen recording client 300 submits the screen recording to the web server 302 for storage.

In operation 328, the web server 302 stores the screen recording in the mass storage device 304. The mass storage device sends a confirmation message, in operation 330, to the web server 302, and the web server 302 sends a confirmation message, in operation 332, to the screen recording client 300.

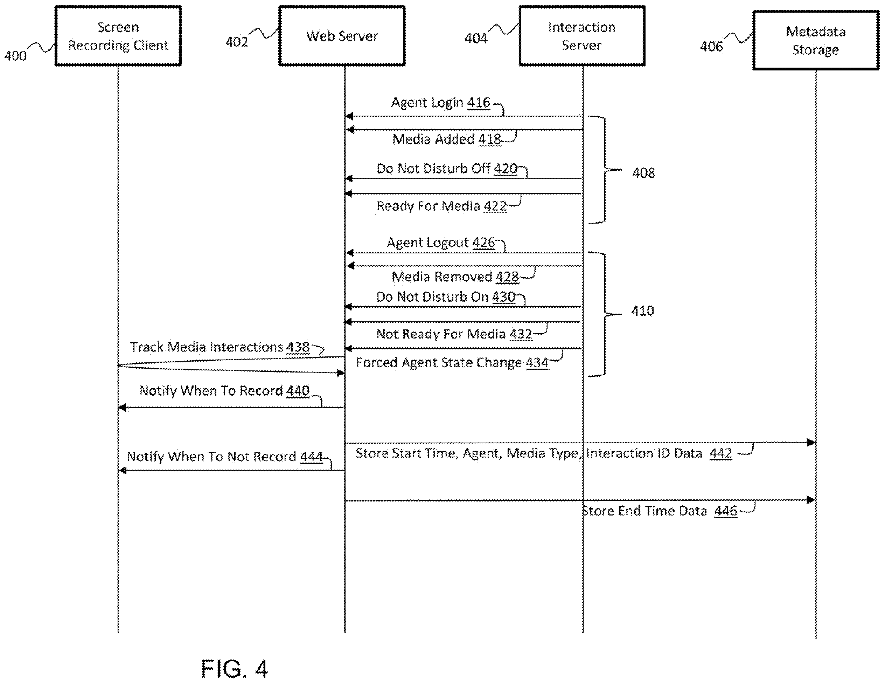

FIG. 4 is a signaling flow diagram illustrating various interactions between a screen recording client 400, a web server 402, an interaction server 404, and a metadata storage 406 to initiate and conduct a recording session and store metadata associated with media communication events occurring during the screen recording session according to embodiments of the invention. The various operations shown in FIG. 4 may occur in addition to the operations shown in FIG. 3 as part of the same interaction recording system.

An instance of the screen recording client 400 runs on an end user device or agent terminal (e.g., agent device 138), and is in communication with the web server 402, which may be the same or similar as the web server 230 shown in FIG. 2. The web server 402 is further in communication with the interaction server 404, which may be the same as or similar to the interaction server 264 in FIG. 2. The web server 402 is also in communication with the metadata storage 406, which may be the same as or similar to the mass storage device 236 shown in FIG. 2.

The interaction server 404 sends signals to the web server 402 defining start recording trigger events 408 and stop recording trigger events 410. The start recording trigger events 408 define the various events that the web server 402 should monitor for to initiate or resume a screen recording session. The stop recording trigger events 410 define the various events that the web server 402 should monitor for to stop or pause a screen recording session.

For example, the start recording triggering events 408 may include: in operation 416; an agent logging into an agent work station or agent device 138, or the agent device 138 logging into/connecting to the web server 402; in operation 418, a new media communication session being added or occurring on the agent device 138 with a customer; in operation 420, a "Do Not Disturb" setting being turned or set to off; and in operation 422, an indication that the agent device 138 is ready to engage in one or more of various types of media communications (e.g., voice, chat, email, etc.).

The stop recording triggering events 410 may include: in operation 426; an agent logging out of an agent work station or agent device 138, or the agent device 138 logging out/disconnecting from the web server 402; in operation 428, a new media communication session being removed or finishing on the agent device 138 with a customer; in operation 430, a "Do Not Disturb" setting being turned or set to on; and in operation 432, an indication that the agent device 138 is not ready to engage in one or more of various types of media communications (e.g., voice, chat, email, etc.).

In operation 438, the web server 402 tracks media interactions or monitors media communications on the screen recording client 400 for the occurrence of one of the start recording triggering events 408 or the stop recording triggering events 410.

In operation 440, when any of the start recording trigger events 408 occurs, the web server 402 sends a signal to the screen recording client 400 to initiate or resume a screen recording session. In operation 442, the web server 402 sends metadata information to the metadata storage 406 regarding communications occurring between the agent device 138 and various customers operating an end user device 106. The metadata information may include start time of the communication (synchronized with a common clock, e.g., a local clock running on the agent device 138), the name or identification of the agent, the type of media communication (e.g., chat, voice, email, etc.), and a unique identifier for the communication.

In operation 444, when any of the stop recording trigger events 410 occurs, the web server 402 sends a signal to the screen recording client 400 to stop or pause a screen recording session. In operation 446, when a communication session is ended, the web server 402 sends end time data for the communication to the metadata storage 406 to be appended or added to the metadata associated with the corresponding media communication session.

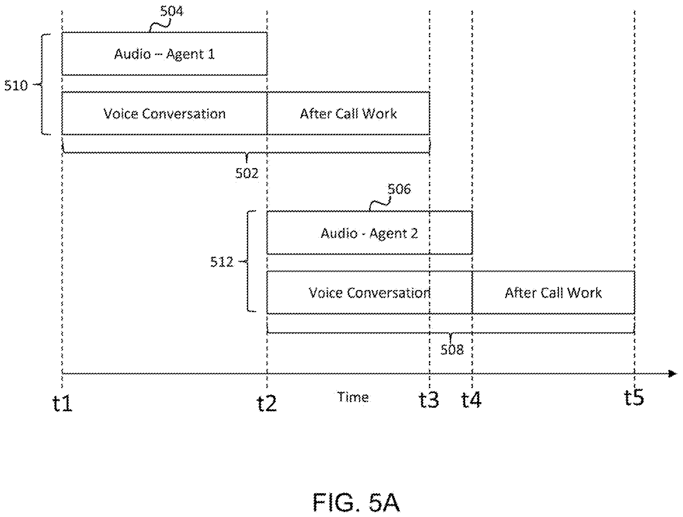

FIGs. 5A-5E illustrate examples of media communications being mapped to screen recording files. FIG. 5A illustrates an example of a single voice communication transfer between multiple agents communicating to a customer (e.g., using a telephony end user device 106). At time t1, the screen recording client 266 operating on the agent device 138 of a first agent, Agent 1, performs a screen recording session to record the screen of the agent device 138 operated by Agent 1, which generates a screen recording file 502. Additionally, at time t1, Agent 1 engages in a telephony communication with a customer (e.g., who is using a telephony end user device 106 and is connected to the agent device 138 as described above with respect to FIGs. 1 and 2), and an audio file 504 of the communication between the customer and Agent 1 is generated.

At time t2, the telephony communication is transferred to a second agent, Agent 2, who proceeds to conduct a voice communication with the customer. Additionally, beginning at time t2, Agent 1 performs various after call work, following up on the voice communication with the customer (e.g., generating written documentation regarding the substance of the communication, etc.), until time t3.

Meanwhile, an audio file 506 recording the voice communication between the customer and Agent 2 is generated, and the screen recording client 266 operating on the agent device 138 of the second agent, Agent 2, performs a screen recording session to record the screen of the agent device 138 operated by Agent 2, which generates a screen recording file 508.

At time t4, the voice communication between the customer and Agent 2 is terminated, and Agent 2 performs various after call work, following up on the voice communication with the customer (e.g., generating written documentation regarding the substance of the communication, etc.), until time t5.

According to one example embodiment, the screen recording file 502 is glued to or merged with the audio file 504 and stored as a single screen recording communication file 510 in mass storage device 226. Similarly, the audio file 506 and the screen recording file 508 are glued or merged and stored as a single screen recording communication file 512 in mass storage device 226. In another embodiment, the audio files and screen recording files may be stored as separate files, rather than being merged. Metadata, including the various start and stop times of the communication and various other activities performed by the agent may be generated and associated with each of the screen recording communication files 510 and 512, and stored as one or more metadata files in mass storage device 236.

Each of the agents may engage in multiple other voice communications throughout the course of their work day, generating screen recording files with associated audio files glued to or merged with them. The screen recording files may be split into multiple files, for example, based on the start and stop times of voice communications, or may be stored as a single screen recording communication file spanning the course of their shift (subject to pausing or stop recording commands from the web server, as discussed above), in which multiple audio files are glued to or merged with the video of the screen recording file in synchronization with when the voice communications occurred during the course of the shift.

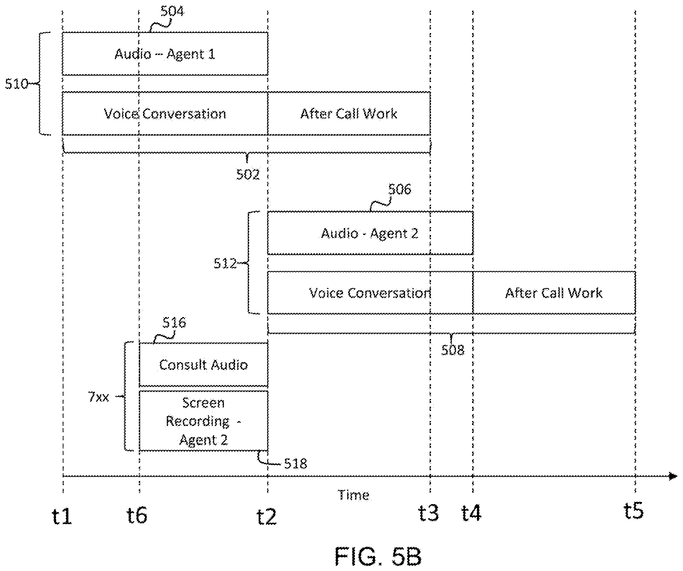

FIG. 5B illustrates another example, in which a consultation audio file is generated during a consultation between Agents 1 and 2. In the example shown in FIG. 5B, before transferring the communication to Agent 2, Agent 1 places the customer on hold and engages in a consultation between Agent 1 and Agent 2 at time t6 (which is prior to time t2) until time t2, at which point the voice communication is transferred to Agent 2 only, as discussed with respect to FIG. 5A. During the consultation between Agent 1 and Agent 2 between time t6 and time t2, the audio communication between Agent 1 and Agent 2 is recorded as an audio file 516, and the Agent 2 screen is recorded by the screen recording client 266 operating on the agent device 138 operated by Agent 2 to generate a screen recording file 518 documenting the activities of the Agent 2, while the activities of Agent 1 are recorded, as discussed above with respect to FIG. 5A, in the screen recording file 502. The audio file 516 is glued to or merged with the screen recording 518, and they are collectively stored as a single screen recording communication file 520 in mass storage device 226. Metadata, including the various start and stop times of the communication and various other activities performed by the agent may be generated and associated with each of the screen recording communication files 510, 512, and 520, and stored as one or more metadata files in mass storage device 236.

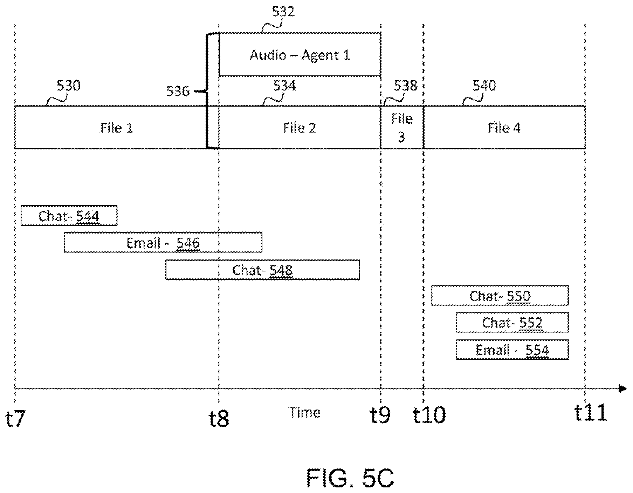

FIG. 5C illustrates another example, in which Agent 1 engages in multiple communications with multiple different customers and/or other agents during the course of a screen recording session (e.g., spanning the duration of a work shift). At time t7, the screen recording client 266 operating on the agent device 138 of Agent I performs a screen recording session to record the screen of the agent device 138, to begin generating a screen recording file 530.

At time t8, Agent 1 engages in a voice communication with a customer or another agent, which is recorded as an audio file 532 spanning until time t9. Also, starting at time t8, a new screen recording file 534, spanning until time t9, is generated. According to one embodiment, the audio file 532 and the screen recording file 534 are glued or merged together and collectively stored as a single screen recording communication file 536. In another embodiment, the audio file 532 and the screen recording file 534 are stored as separate files rather than being merged. At time t9, a separate screen recording file 538 is generated as Agent 1 conducts after call work related to the voice communication associated with the audio file 532. In another embodiment, the screen recording file 534 and the screen recording file 538 may be merged or generated as a single screen recording file, for example, to capture the screen recording during the audio file 532 and after call work performed after the communication is terminated related to the voice communication. Starting at time t10, a new screen recording file 540 may be generated to capture additional activity conducted by Agent 1. The screen recording files 530, 538, and 540, and the screen recording communication file 536 are each stored in the mass storage device 226.

Additionally, metadata, including the various start and stop times of communications and various other activities performed by Agent 1 may be generated and stored as one or more metadata files in mass storage device 236. For example, between time t7 and time t8. Agent 1 participates in a text or messaging chat communication 544 with a customer or agent operating an end user device 106 or agent device 138. Metadata, such as the start time, stop time, unique interaction identification, media type, duration, interactive voice response (IVR) profile associated with the Agent 1, file size, and other relevant parameters of the chat communication 544 are stored in the mass storage device 236.

Similarly, Agent I engages in drafting or reviewing an email communication 546 and engages in a chat communication 548 starting between times t7 and t8, and spanning until after time t8. After time t10, Agent 1 engages in a chat communication 550, another chat communication 552, and drafting/reviewing another email communication 554. Metadata associated with each of the communications 544-554 is stored as one or more metadata files in the mass storage device 236.

As illustrated in FIG. 5C, however, in some embodiments, some communications may span multiple screen recording files (e.g., email communication 554 and chat 548) begin during screen recording file 530, and extend into screen recording file 534. Thus, during subsequent searching and playback of communication events using the screen recording files, multiple screen recording files may be delivered and displayed in sequence to display the entire course of an individual communication. The screen recording files, however, may be broken up into various file sizes that correspond to audio recordings, or time/data storage factors according to the design of the agent interaction recording system 100.

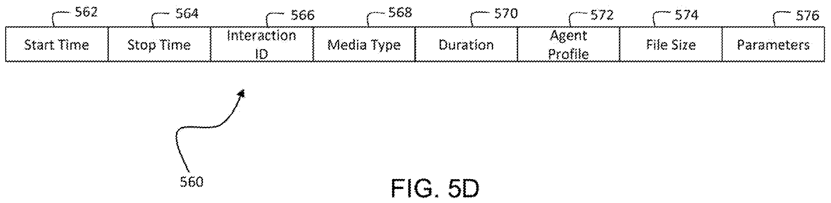

FIG. 5D illustrates example information that may be stored in a metadata file associated with an individual communication. For example, a metadata file 560 associated with a media communication may include start time information 562, stop time information 564, unique interaction identification information 566, media type (e.g., email, chat, voice, etc.) information 568, duration information 570, agent profile information 572 associated with the corresponding agent engaging in the communication, file size information 574, and any other relevant parameter information 576 about the communication according to the design of the agent interaction recording system 100.

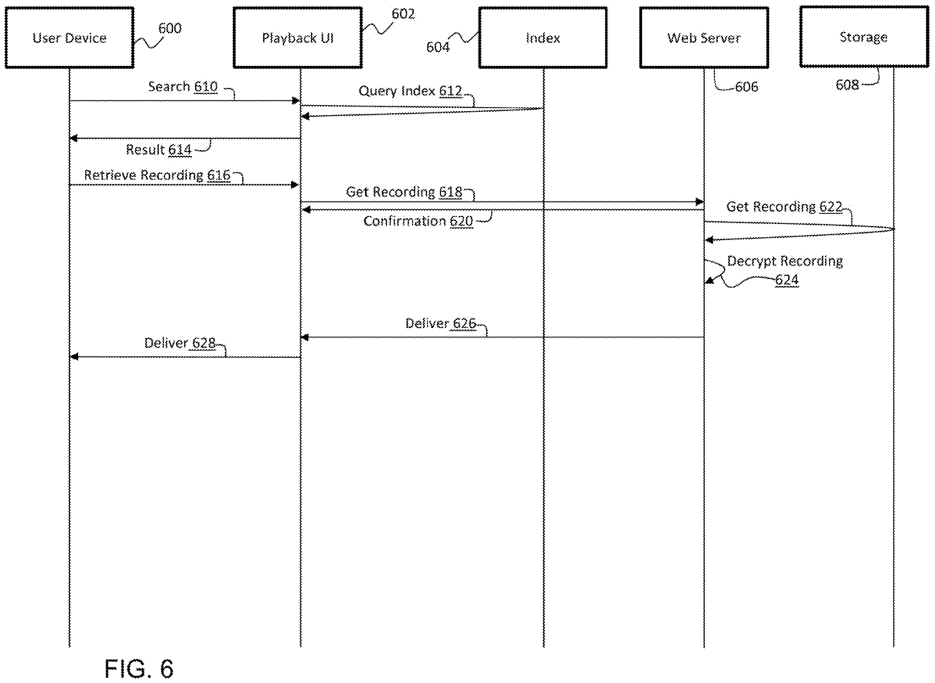

FIG. 6 is a signaling flow diagram illustrating various interactions between an agent device 600, a playback user interface (UI) 602, an index 604, a web server 606, and a storage device 608 operating together as part of an agent interaction recording system to search and playback recordings of voice and non-voice interactions, and/or agent screen recordings, to the agent device 600 depending on searches conducted by an agent operating the agent device 600. The agent device 600, the playback UI 602, the index 604, the web server 606, and the storage device 608 may be the same as, or similar to, the agent device 138, the playback UI 254, the index 258, the web server 230, and the storage device 226 shown in FIG. 2, respectively. In operation 610, the agent transmits a search to the playback UI 602 via the user device 600. In operation 612, the playback UI 602 searches the index 604 associated with various screen recordings, and in operation 614, returns the results of the search to the user device 600.

The agent selects a recording for playback and sends a request to retrieve the recording to the playback UI 602 in operation 616. In operation 618, the playback UI 602 sends a request to the web server 606 to get the recording, and in operation 620, receives a confirmation from the web server 606 that the request was received. In operation 622, the web server 606 retrieves the recording from the storage device 608 and, in operation 624, the web server 606 decrypts the recording, if necessary. In operation 626, the web server 606 delivers the recording to the playback UI 602 for display or delivery on the user device 600.

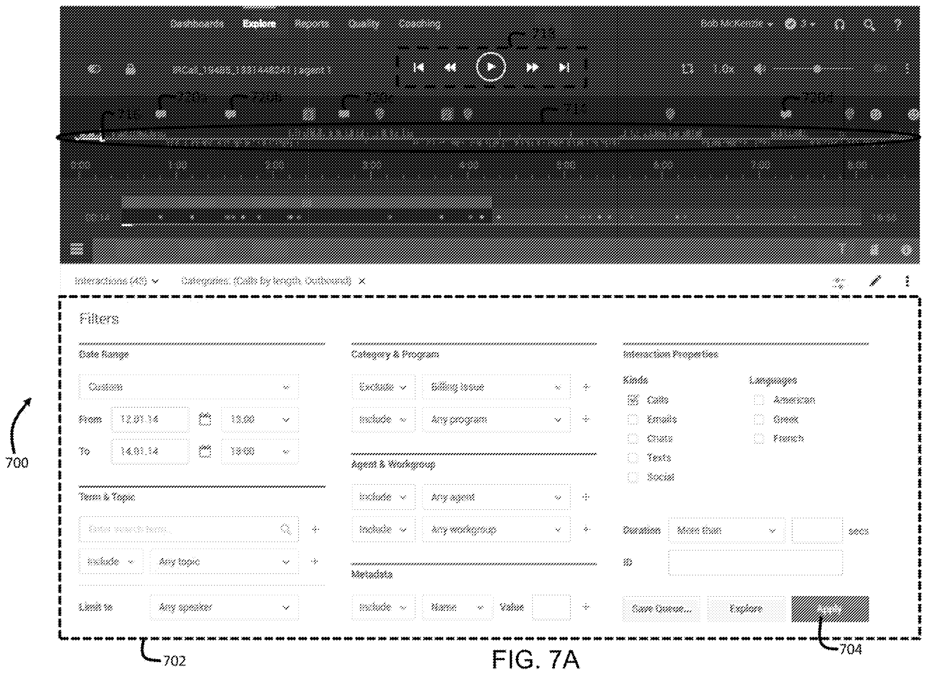

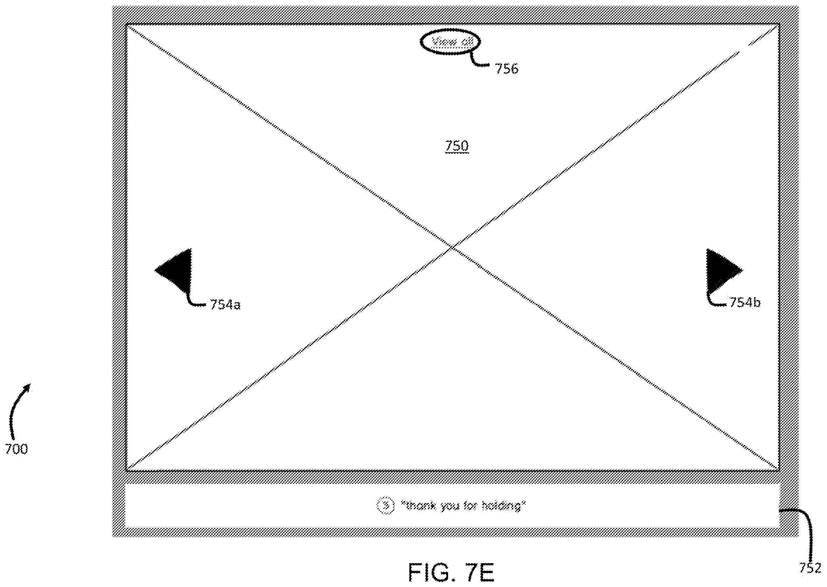

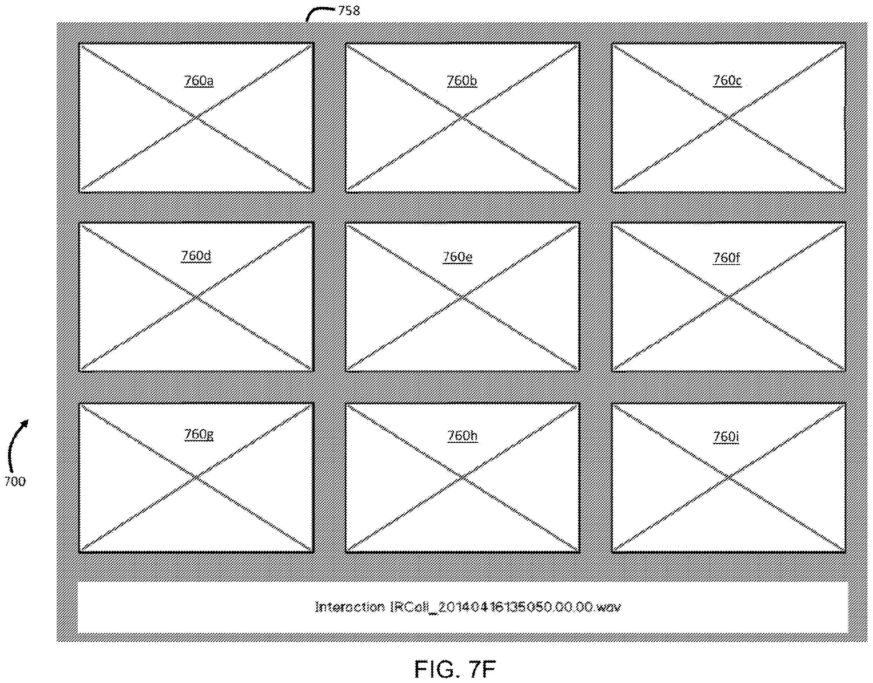

FIGs. 7A-7F illustrate a playback and search UI 700 according to embodiments of the present invention. The playback UI 700 may be the same as or similar to the playback UI described with respect to FIG. 2, and may interact with the components shown in previous figures (e.g.. FIG. 2) to display search tools and playback screen recordings on an agent device 138.

The playback UI 700 displays a plurality of filters 702, for example, date range, term and topic, category and program, agent and workgroup, metadata, interaction properties, duration, and any other relevant search filter according to the design of the agent interaction recording system 100. An agent interacting with the playback UI 700 using an agent device 138 can utilize the filters to search the recordings stored in the storage device 226 based on the metadata associated with various media communications and stored in the mass storage device 236. For example, a supervisory agent may wish to review all communications occurring between customers and agents in a particular workgroup during a certain time frame to determine performance of the agents in that workgroup or for training of new agents. Thus, the supervisory agent may select workgroup on the workgroup dropdown under the agent and workgroup category, select a data range, and click the apply button 704 to perform the search.

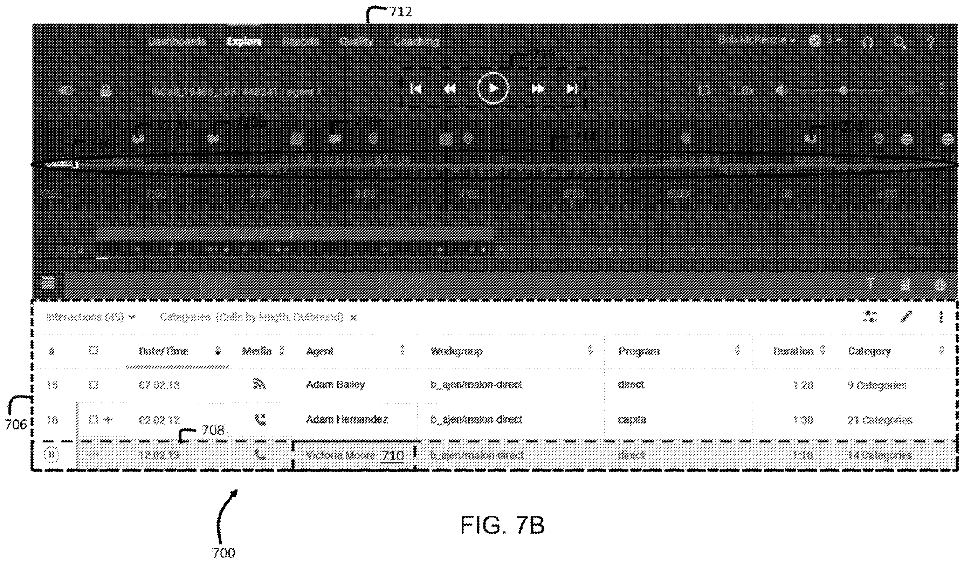

FIG. 7B illustrates search results 706, after performing a search. The supervising agent reviewing the search results can click or select one of the search results 708 to review screen recordings associated with the selected agent 710. By highlighting or selecting the agent 710, a playback panel 712 allows the supervising agent to review the activities of the agent 710 during the course of a recording session (e.g., the duration of a work shift). For example, the playback panel 712 includes a playback progress bar 714, in which the supervising agent can navigate through the course of an entire recording session using a sliding selector tool 716. The supervising agent can also play, fast forward, skip ahead, etc. using playback controls 718.

A series of markers 720a-720d may be displayed at various points along the playback progress bar to indicate the occurrence of individual different media communications or other activities that occurred during the course of the recording session. The markers 720a-720d may be generated based on information stored in the corresponding metadata files, such as the start time, end time, or duration of the media communications or other activities. The markers may be represented as symbols, icons, or text, and may correspond to a specific time of the screen recording session (e.g., the start time of the communication or activity, or a predetermined period prior to the communication or activity), or may be illustrated as a bar spanning the corresponding duration of the screen recording session.

According to one embodiment, the supervising agent may hover over or mouse over individual markers 720a-720d to display a thumbnail image or a short series of images reflecting the screen recording during that time period in a separate popup panel (shown below), to assist the supervising agent with navigating through the recording session.

During playback, the supervising agent may navigate to various portions of the recording session, for example, by using the playback progress bar 714, the sliding selector tool 716, the playback controls 718, or by selecting one of the media communication markers 720a-720d, in order to review video and audio associated with the recording session at various times during the recording session. In some embodiments, in response to selection of the markers, the communication event or activity itself may be retrieved. For example, if the communication event involves a chat communication or an email communication, selection of the marker may retrieve the chat communication or email communication itself.

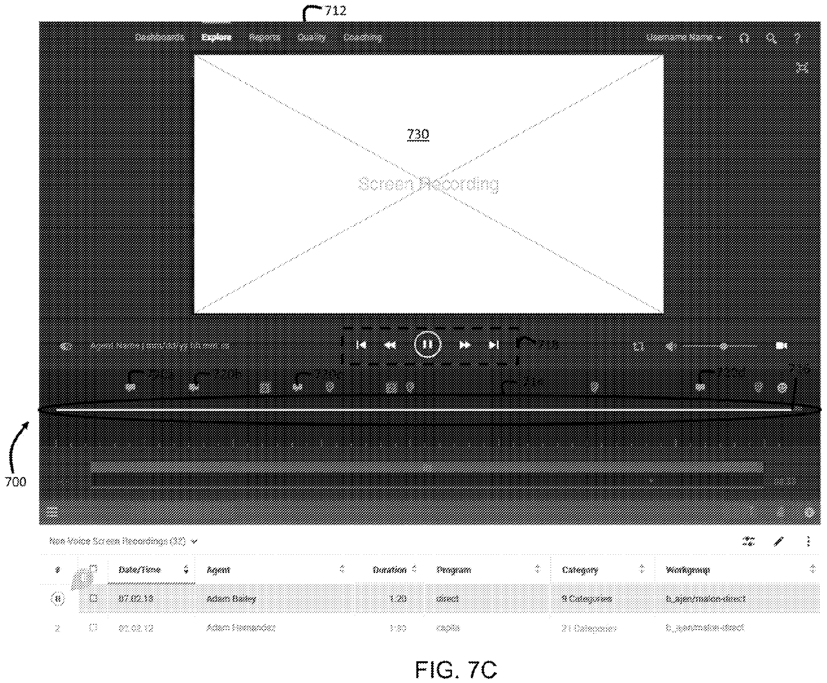

As shown in FIG. 7C, a display pane 730 may be displayed in the playback panel 712 to enable the video of the screen recording to be displayed to the supervising agent. As discussed above, audio files may be glued to or merged with portions of the video file when the agent engages in voice or telephony communications with customers or other agents. Alternatively, the audio files and the video file(s) may not be merged into a single file, and instead may be stored as separate files. The separate audio and video files may be later merged or played simultaneously during playback in synchronization with a clock (e.g., a local clock running on the agent terminal).

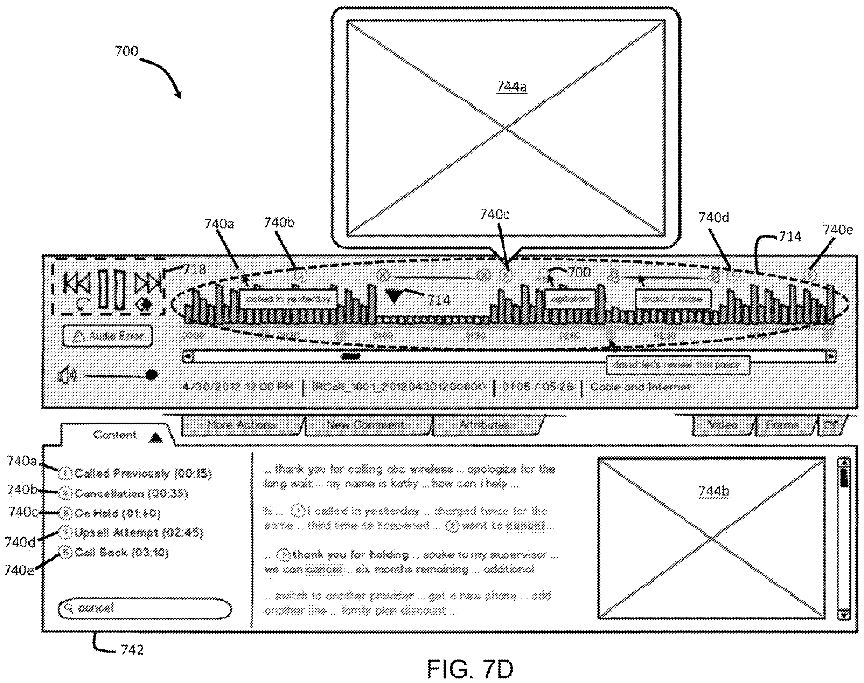

As shown in FIG. 7D, the playback U1 700 may additionally display a plurality of topic or communication markers 740a-740e, for example, aligned along the playback progress bar 714 and/or in a separate review pane 742. The topic or communication markers 740a-740e may be the same as, or similar to, the markers 720a-720d The markers 740a-740e may identify the occurrence of a topic of discussion occurring during the course of a voice or text communication during a recording session. The topics associated with the markers 740a-740e may be identified or determined using voice and/or text speech analysis discussed above with respect to the speech server 256 in FIG. 2.

The supervising agent may select or click on one of the markers 740a-740e to navigate within the video playback to the corresponding portion of the screen recording session. Additionally, the supervising agent may hover over or mouse over one of the markers 740a-740e to reveal a thumbnail image (or short video clip) of a screen shot (or screen recording) occurring at a time associated with the markers 740a-740e. The playback UI 700, for example, may display a thumbnail image 744a above the playback progress bar 714, and/or a thumbnail image 744b at a different location within the playback UI 700 (e.g., within the review pane 742) according to the design of the agent interaction recording system 100 and the display real estate of the playback UI 700. The playback UI 700 may further allow the supervising agent to hover over or mouse over any point along the playback progress bar 714, or one of the media communication markers 720a-720d to display a similar thumbnail image (or short video clip) of the screen recording occurring at a time associated with the time position along the playback progress bar 714.

The supervising agent may additionally select or click the thumbnail image 744a or 744b, a media communication marker 720a-720d, or a particular location along the playback progress bar 714 in order to display an enlarged image pane 750. The enlarged image pane 750 may display an enlarged version of the screen shot of the screen recording associated with the selected symbol or segment of the playback progress bar 714. An informational pane 752 may show information corresponding to the image displayed in the enlarged image pane 750, for example, a transcript of text or speech occurring around the time of the thumbnail image, or a list of one or more media communications or topics being discussed around the time of the thumbnail image. Additionally, a back button 754a and a forward button 754b may be displayed or overlaid on the enlarged image pane 750 to enable backward and forward navigation in a sequence of images associated with different topics, or media communications occurring during a screen recording session. A gallery view button 756 may also be displayed or overlaid on the enlarged image pane 750 to enable a gallery view of the sequence of images.

In response to selection of the gallery view button 756, the playback UI 700 may display a gallery view pane 758 displaying a gallery of a plurality of images (or short video clips) 760a-760i associated with communication events, topics of discussion, agent activities, etc., during the course of a screen recording session (e.g., a work shift of an agent). In another embodiment, the gallery view pane 758 may display screen shots from a plurality of screen recording sessions of the same agent or multiple different agents, when such agents are communicating with customers or other agents about a particular topic, via a particular type of media communication, etc.

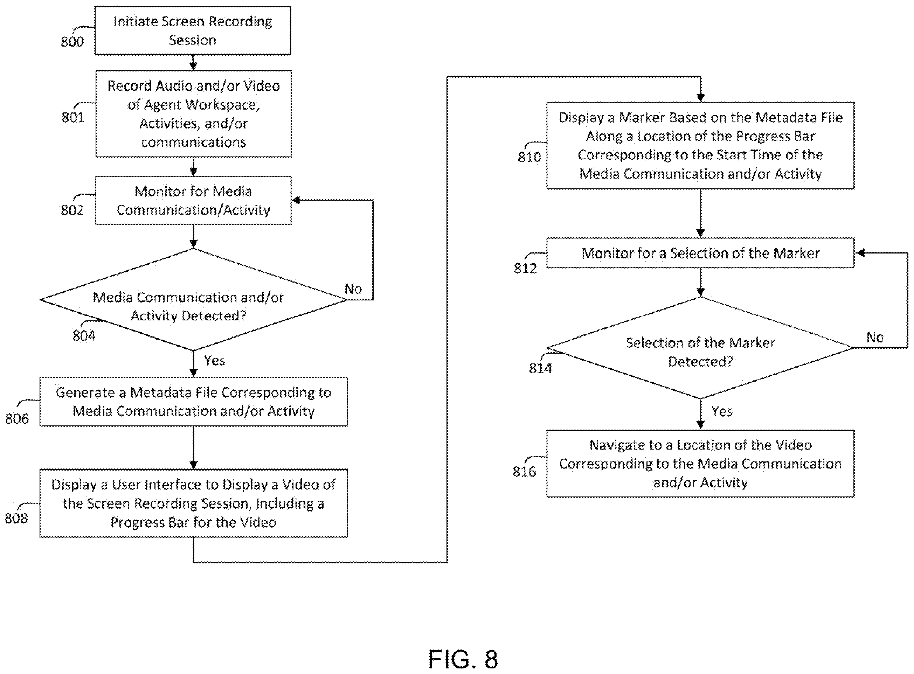

FIG. 8 illustrates a flow chart for navigating to a location of a video based on a selection of a marker according to some embodiments of the present invention. At block 800, the agent interaction recording system 100 initiates a screen recording session of an agent workspace. The agent workspace may be a local screen of an agent device, or may be a browser-based workspace user interface.

At block 801, the agent interaction recording system 100 records video and/or audio of the agent's workspace or individual activities and communications conducted by the agent (e.g., during the course of the agent's work shift).

At block 802, the agent interaction recording system 100 monitors for certain media communications or activities of the agent. For example, the agent interaction recording system 100 may monitor for voice/telephony communications, chat communications, email communications, or other types of voice or non-voice communication or interaction events. The agent interaction recording system 100 may further monitor for other types of activities during the course of an agent's work shift (e.g., Internet browser activities, documentation of interactions, etc.) that may not involve communication with customers or other agents, but that a business is interested in monitoring.

At block 804, the agent interaction recording system 100 determines whether or not a media communication and/or other activity of interest is detected on the agent's workspace. If a media communication and/or other activity of interest is not detected, the agent interaction recording system 100 returns to block 802 to continue monitoring for a media communication and/or other activity of interest.

On the other hand, if a media communication and/or other activity of interest is detected, the agent interaction recording system 100 proceeds to block 806 to generate a metadata file corresponding to the detected media communication and/or activity of interest. The metadata file may include information about the media communication or activity, such as the start time, end time, media or activity identification, media or activity duration, media or activity type.

The agent interaction recording system 100 may continue to monitor for additional media communication or activity events during the course of the agent's work shift, and generating metadata corresponding to each of the events.

At block 808, during playback of the screen recording session, the agent interaction recording system 100 displays or provides a user interface (e.g., the playback UI 254 illustrated in FIG. 2) to display a video of the screen recording session, including a progress bar for the video.

At block 810, the agent interaction recording system 100 displays or provides a marker based on the information stored in the metadata file along a location of the progress bar corresponding to the time (e.g., the start time, end time, or a predefined period of time before or after the event) of the media communication and/or activity.

At block 812, the agent interaction recording system 100 monitors for a selection of the marker.

At block 814, the agent interaction recording system 100 detects whether or not the marker is selected. If a selection of the marker is not selected, the agent interaction recording system 100 returns to block 812 to continue to monitor for the selection of the marker.

On the other hand, if agent interaction recording system 100 detects a selection of the marker, agent interaction recording system 100 navigates to a location of the video corresponding to the media communication and/or activity based on the metadata corresponding to the marker. In some embodiments, the agent interaction recording system 100 may navigate to a location in the video a predetermined period of time (e.g., 5-30 seconds) before the start time of the media communication or activity event, according to the design of the agent interaction recording system 100. In other embodiments, the agent interaction recording system 100 may navigate to the start time of the media communication or activity event. Additionally, according to some embodiments of the present invention, the agent interaction recording system 100 may display a screen shot of the agent workstation, or may only display a portion of the video corresponding to the particular media communication or activity event, and stop displaying the video after the communication event or activity is over, or after the agent has completed other associated work (e.g., follow-up or post-call work related to the media communication or activity event). In other embodiments, the agent interaction recording system 100 may navigate to the portion of the screen recording corresponding to the media communication or activity, and continue displaying the remainder of the screen recording even after the media communication or activity is completed, until another marker is selected or until the user interface is closed.

According to aspects of embodiments of the present invention, therefore, the agent interaction recording system 100 enables customers and agents to communicate (e.g., in a contact center environment) in a way that can be monitored or recorded for subsequent playback and analysis according to business needs. For example, the agent interaction recording system 100 enables work station screen recordings to be recorded and stored, and subsequently searched (e.g., by supervisors) according to various filters (e.g., topics of communication, types of media communication, agent work groups, etc.) in order to, for example, evaluate the performance of agents, train new information, or glean information about customer or agent behavior according to business needs.

The agent interaction recording system 100 enables audio/voice communication to by synchronized with screen recording sessions by gluing or merging the audio communication to the corresponding portion of a screen recording session in synchronization with a common clock (e.g., the local time clock of an agent device). The audio/voice communication can be analyzed using speech analysis techniques to determine topics of conversation, thereby enabling convenient search and analysis during subsequent playback.

Further, the agent interaction recording system 100 enables different types of media communications to be identified during a screen recording session using metadata files that are stored for subsequent search and analysis. Accordingly, during subsequent searching and playback of screen recording sessions, the metadata files can be utilized to enable navigation to sections of a screen recording session that are relevant to the search, thereby reducing the need for manually reviewing long segments of screen recording video in order to identify a particular activity or media communication event that is relevant to some business purpose. Individual screenshot images (or short video clips) of events occurring during the course of a screen recording may be displayed in a playback user interface to enable a user to navigate to locations in a screen recording session corresponding to a communication event or agent activity of interest. Additionally, a plurality of images (or short video) clips may be displayed in a playback user interface in the form of a gallery of images to enable a user to review a sequence of events or a plurality of related events in order to select and review a corresponding portion of the screen recording session.

Accordingly, the agent interaction recording system 100 according to embodiments of the present invention enables easier and more convenient analysis of agent activities and media communications during the course of a screen recording session by identifying the occurrence of communication events or activities, saving information about those communication events or activities for subsequent searching and filtering, and enabling playback of relevant segments of a screen recording session based on search results.

Although this invention has been described in certain specific embodiments, those skilled in the art will have no difficulty devising variations to the described embodiment. Furthermore, to those skilled in the various arts, the invention itself herein will suggest solutions to other tasks and adaptations for other applications. Thus, the present embodiments of the invention should be considered in all respects as illustrative and not restrictive. The scope of the invention is defined by the appended claims rather than the foregoing description.

## Claims

1. A system for recording agent interactions, the system comprising:
a processor; and
a memory coupled to the processor, wherein the memory has stored thereon instructions that, when executed by the processor, cause the processor to:
initiate a screen recording session on an electronic device accessible to a contact center agent, the screen recording session for generating a video file with a video recording of a display screen coupled to the electronic device, the video recording spanning a particular time period;
monitor for a media communication occurring on the electronic device;
receive a plurality of media communications during the screen recording session, wherein the plurality of media communications includes a first telephony call occurring at a first time period, a second telephony call occurring at a second time period, and an email or chat communication occurring at a third time period;
generate first and second audio files for respectively the first telephony call and the second telephony call;
merge the video file and the first and second audio files for generating a single screen recording communication file, wherein the first and second audio files and the video file are synchronized with a common clock;
generate a metadata file corresponding to the plurality of media communications, wherein the metadata file comprises a start time of each of the plurality of media communications with respect to the screen recording session;
store the metadata file in association with the single screen recording communication file;
display a user interface to display a video of the screen recording session, wherein the user interface includes a progress bar for the video;
display a marker based on the metadata file along a location of the progress bar corresponding to the start time of each of the plurality of media communications;
detect selection of a first marker corresponding to the first telephony call;
navigate to a first location of the video corresponding to the first telephony call in response to detecting a selection of the first marker;
playback a first portion of the video based on the navigated portion of the video; and
playback the audio corresponding to the first telephony call in synchronization with the playback of the first portion of the video ;
detect selection of a second marker corresponding to the email or chat communication;
in response to the selection of the second marker:
navigate to a second location of the video corresponding to the email or chat communication;
playback a second portion of the video based on the navigated second location of the video;
retrieve the email or chat communication from a data storage device; and
display the retrieved email or chat communication.

2. The system of one of claim 1, wherein the metadata file further comprises a stop time of the media communication with respect to the screen recording session, or the metadata comprises an identification of a type of the media communication, or profile information of an entity engaging in the media communication.

3. The system of one of claims 1-2, wherein the instructions further cause the processor to:
generate an image of the screen recording session corresponding to the media communication; and
display the image in the user interface.

4. The system of one of claims 1-3, wherein the instructions further cause the processor to:
receive a search query;
compare the search query with information stored in the metadata file; and
return a search result based on the comparison listing the video file corresponding to the search result.

5. The system of claim 4, wherein the instructions further cause the processor to:
receive a selection based on the search result; and
display the video in response to the selection based on the search result.

6. The system of claim 1, wherein the instructions further cause the processor to:
generate a plurality of images of the screen recording session corresponding to the media communication;
display the images in an image gallery, wherein the images comprise a segment of the video file corresponding to the screen recording session during the media communication.

7. The system of claim 6, wherein the images correspond to the marker, wherein the instructions further cause the processor to:
display the plurality of images in response to the selection of the marker;
receive a selection to enlarge at least one of the images; and
display an enlarged version of the at least one of the images in response to the selection to enlarge the at least one of the images.

8. A method for recording agent interactions, the method comprising:
initiating, by a processor, a screen recording session on an electronic device accessible to a contact center agent, the screen recording session for generating a video file with a video recording of a display screen coupled to the electronic device, the video recording spanning a particular time period;
monitoring, by the processor, for a media communication occurring on the electronic device;
receiving, by the processor, a plurality of media communications during the screen recording session, wherein the plurality of media communications includes a first telephony call occurring at a first time period, a second telephony call occurring at a second time period, and an email or chat communication occurring at a third time period;
generating, by the processor, first and second audio files for respectively the first telephony call and the second telephony call;
merging, by the processor, the video file and the first and second audio files for generating a single screen recording communication file, wherein the first and second audio files and the video file are synchronized with a common clock;
generating, by the processor, a metadata file corresponding to the plurality of media communications, wherein the metadata file comprises a start time of each of the plurality of media communications with respect to the screen recording session;
storing, by the processor, the metadata file in association with the single screen recording communication file;
displaying, by the processor, a user interface to display a video of the screen recording session, wherein the user interface includes a progress bar for the video;
displaying, by the processor, a marker based on the metadata file along a location of the progress bar corresponding to the start time of each of the plurality of media communications;
detecting, by the processor, selection of a first marker corresponding to the first telephony call;
navigating, by the processor, to a first location of the video corresponding to the first telephony call in response to detecting a selection of the first marker;
playing back, by the processor, a first portion of the video based on the navigated first location of the video;
playing back, by the processor, the audio corresponding to the first telephony call in synchronization with the playback of the first portion of the video
detecting, by the processor, selection of a second marker corresponding to the email or chat communication;
in response to the selection of the second marker:
navigating, by the processor, to a second location of the video corresponding to the email or chat communication;
playing back a second portion of the video based on the navigated second location of the video;
retrieving the email or chat communication from a data storage device; and
displaying the retrieved email or chat communication.

## Patentansprüche

1. System zur Aufzeichnung von Agenteninteraktionen, wobei das System Folgendes umfasst:
einen Prozessor; und
einen Speicher, der an den Prozessor gekoppelt ist, wobei in dem Speicher Anweisungen gespeichert sind, die, wenn sie durch den Prozessor ausgeführt werden, den Prozessor zu Folgendem veranlassen:
Initiieren einer Bildschirmaufzeichnungssitzung an einer elektronischen Vorrichtung, die einem Kontakt-Center-Agent zugänglich ist, wobei die Bildschirmaufzeichnungssitzung dem Erzeugen einer Videodatei mit einer Videoaufzeichnung eines Anzeigebildschirms dient, der an die elektronische Vorrichtung gekoppelt ist, wobei die Videoaufzeichnung einen bestimmten Zeitraum umspannt;
Überwachen auf eine Medienkommunikation, die an der elektronischen Vorrichtung stattfindet;
Empfangen einer Vielzahl von Medienkommunikationen während der Bildschirmaufzeichnungssitzung, wobei die Vielzahl von Medienkommunikationen einen ersten Telefonanruf, der in einem ersten Zeitraum stattfindet, einen zweiten Telefonanruf, der in einem zweiten Zeitraum stattfindet, und eine E-Mail- oder Chat-Kommunikation, die in einem dritten Zeitraum stattfindet, beinhaltet;
Erzeugen einer ersten und einer zweiten Audiodatei jeweils für den ersten Telefonanruf und den zweiten Telefonanruf;
Zusammenführen der Videodatei und der ersten und der zweiten Audiodatei zum Erzeugen einer einzelnen Bildschirmaufzeichnungskommunikationsdatei, wobei die erste und die zweite Audiodatei und die Videodatei mit einem gemeinsamen Takt synchronisiert sind;
Erzeugen einer Metadatendatei entsprechend der Vielzahl von Medienkommunikationen, wobei die Metadatendatei eine Startzeit von jeder aus der Vielzahl von Medienkommunikationen in Bezug auf die Bildschirmaufzeichnungssitzung umfasst;
Speichern der Metadatendatei in Verbindung mit der einzelnen Bildschirmaufzeichnungskommunikationsdatei;
Anzeigen einer Benutzerschnittstelle zum Anzeigen eines Videos der Bildschirmaufzeichnungssitzung, wobei die Benutzerschnittstelle einen Fortschrittsbalken für das Video beinhaltet;
Anzeigen einer Markierung basierend auf der Metadatendatei entlang einer Stelle des Fortschrittsbalkens entsprechend der Startzeit von jeder aus der Vielzahl von Medienkommunikationen;
Erfassen von Auswahl einer ersten Markierung entsprechend dem ersten Telefonanruf;
Navigieren zu einer ersten Stelle des Videos entsprechend dem ersten Telefonanruf als Reaktion auf das Erfassen einer Auswahl der ersten Markierung;
Wiedergeben eines ersten Teils des Videos basierend auf dem navigierten Teil des Videos; und
Wiedergeben des Audios entsprechend dem ersten Telefonanruf synchron mit der Wiedergabe des ersten Teils des Videos;
Erfassen von Auswahl einer zweiten Markierung entsprechend der E-Mail- oder Chat-Kommunikation;
als Reaktion auf die Auswahl der zweiten Markierung:
Navigieren zu einer zweiten Stelle des Videos entsprechend der E-Mail- oder Chat-Kommunikation;
Wiedergeben eines zweiten Teils des Videos basierend auf der navigierten zweiten Stelle des Videos;
Abrufen der E-Mail- oder Chat-Kommunikation aus einer Datenspeichervorrichtung; und
Anzeigen der abgerufenen E-Mail oder Chat-Kommunikation.

2. System nach einem von Anspruch 1, wobei die Metadatendatei ferner eine Stoppzeit der Medienkommunikation in Bezug auf die Bildschirmaufzeichnungssitzung umfasst, oder die Metadatendatei eine Identifizierung einer Art der Medienkommunikation oder Profilinformationen einer Einheit, die an der Medienkommunikation beteiligt ist, umfasst.

3. System nach einem der Ansprüche 1-2, wobei die Anweisungen ferner den Prozessor zu Folgendem veranlassen:
Erzeugen eines Bildes der Bildschirmaufzeichnungssitzung entsprechend der Medienkommunikation; und
Anzeigen des Bildes in der Benutzerschnittstelle.

4. System nach einem der Ansprüche 1-3, wobei die Anweisungen ferner den Prozessor zu Folgendem veranlassen:
Empfangen einer Suchabfrage;
Vergleichen der Suchabfrage mit Informationen, die in der Metadatendatei gespeichert sind; und
Zurückgeben eines Suchergebnisses basierend auf dem Vergleich, der die Videodatei entsprechend dem Suchergebnis auflistet.

5. System nach Anspruch 4, wobei die Anweisungen ferner den Prozessor zu Folgendem veranlassen:
Empfangen einer Auswahl basierend auf dem Suchergebnis; und
Anzeigen des Videos als Reaktion auf die Auswahl basierend auf dem Suchergebnis.

6. System nach Anspruch 1, wobei die Anweisungen ferner den Prozessor zu Folgendem veranlassen:
Erzeugen einer Vielzahl von Bildern der Bildschirmaufzeichnungssitzung entsprechend der Medienkommunikation;
Anzeigen der Bilder in einer Bildgalerie, wobei die Bilder ein Segment der Videodatei entsprechend der Bildschirmaufzeichnungssitzung während der Medienkommunikation umfassen.

7. System nach Anspruch 6, wobei die Bilder der Markierung entsprechen, wobei die Anweisungen ferner den Prozessor zu Folgendem veranlassen:
Anzeigen der Vielzahl von Bildern als Reaktion auf die Auswahl der Markierung;
Empfangen einer Auswahl zum Vergrößern von zumindest einem der Bilder; und
Anzeigen einer vergrößerten Version von dem zumindest einem der Bilder als Reaktion auf die Auswahl zum Vergrößern des zumindest einen der Bilder.

8. Verfahren zur Aufzeichnung von Agenteninteraktionen, wobei das Verfahren Folgendes umfasst:
Initiieren, durch einen Prozessor, einer Bildschirmaufzeichnungssitzung an einer elektronischen Vorrichtung, die einem Kontakt-Center-Agent zugänglich ist, wobei die Bildschirmaufzeichnungssitzung dem Erzeugen einer Videodatei mit einer Videoaufzeichnung eines Anzeigebildschirms dient, der an die elektronische Vorrichtung gekoppelt ist, wobei die Videoaufzeichnung einen bestimmten Zeitraum umspannt;
Überwachen, durch den Prozessor, auf eine Medienkommunikation, die an der elektronischen Vorrichtung stattfindet;
Empfangen, durch den Prozessor, einer Vielzahl von Medienkommunikationen während der Bildschirmaufzeichnungssitzung, wobei die Vielzahl von Medienkommunikationen einen ersten Telefonanruf, der in einem ersten Zeitraum stattfindet, einen zweiten Telefonanruf, der in einem zweiten Zeitraum stattfindet, und eine E-Mail- oder Chat-Kommunikation, die in einem dritten Zeitraum stattfindet, beinhaltet;
Erzeugen, durch den Prozessor, einer ersten und einer zweiten Audiodatei jeweils für den ersten Telefonanruf und den zweiten Telefonanruf;
Zusammenführen, durch den Prozessor, der Videodatei und der ersten und der zweiten Audiodatei zum Erzeugen einer einzelnen Bildschirmaufzeichnungskommunikationsdatei, wobei die erste und die zweite Audiodatei und die Videodatei mit einem gemeinsamen Takt synchronisiert sind;
Erzeugen, durch den Prozessor, einer Metadatendatei entsprechend der Vielzahl von Medienkommunikationen, wobei die Metadatendatei eine Startzeit von jeder aus der Vielzahl von Medienkommunikationen in Bezug auf die Bildschirmaufzeichnungssitzung umfasst;
Speichern, durch den Prozessor, der Metadatendatei in Verbindung mit der einzelnen Bildschirmaufzeichnungskommunikationsdatei;
Anzeigen, durch den Prozessor, einer Benutzerschnittstelle zum Anzeigen eines Videos der Bildschirmaufzeichnungssitzung, wobei die Benutzerschnittstelle einen Fortschrittsbalken für das Video beinhaltet;
Anzeigen, durch den Prozessor, einer Markierung basierend auf der Metadatendatei entlang einer Stelle des Fortschrittsbalkens entsprechend der Startzeit von jeder aus der Vielzahl von Medienkommunikationen;
Erfassen, durch den Prozessor, von Auswahl einer ersten Markierung entsprechend dem ersten Telefonanruf;
Navigieren, durch den Prozessor, zu einer ersten Stelle des Videos entsprechend dem ersten Telefonanruf als Reaktion auf das Erfassen einer Auswahl der ersten Markierung;
Wiedergeben, durch den Prozessor, eines ersten Teils des Videos basierend auf der navigierten ersten Stelle des Videos;
Wiedergeben, durch den Prozessor, des Audios entsprechend dem ersten Telefonanruf synchron mit der Wiedergabe des ersten Teils des Videos;
Erfassen, durch den Prozessor, von Auswahl einer zweiten Markierung entsprechend der E-Mail- oder Chat-Kommunikation;
als Reaktion auf die Auswahl der zweiten Markierung:
Navigieren, durch den Prozessor, zu einer zweiten Stelle des Videos entsprechend der E-Mail- oder Chat-Kommunikation;
Wiedergeben eines zweiten Teils des Videos basierend auf der navigierten zweiten Stelle des Videos;
Abrufen der E-Mail- oder Chat-Kommunikation aus einer Datenspeichervorrichtung; und
Anzeigen der abgerufenen E-Mail oder Chat-Kommunikation.

## Revendications

1. Système pour enregistrer des interactions d'agents, le système comprenant :
un processeur ; et
une mémoire couplée au processeur, dans lequel la mémoire comporte des instructions stockées sur celle-ci qui, lorsqu'elles sont exécutées par le processeur, amènent le processeur à :
initier une session d'enregistrement d'écran sur un dispositif électronique accessible à un agent de centre d'appel, la session d'enregistrement d'écran servant à générer un fichier vidéo avec un enregistrement vidéo d'un écran d'affichage couplé au dispositif électronique, l'enregistrement vidéo s'étendant sur une période de temps particulière ;
surveiller une communication multimédia se produisant sur le dispositif électronique ;
recevoir une pluralité de communications multimédia pendant la session d'enregistrement d'écran, dans lequel la pluralité de communications multimédia comporte un premier appel téléphonique se produisant à une première période de temps, un second appel téléphonique se produisant à une deuxième période de temps, et une communication par courrier électronique ou par chat se produisant à une troisième période de temps ;
générer des premier et second fichiers audio pour respectivement le premier appel téléphonique et le second appel téléphonique ;
fusionner le fichier vidéo et les premier et second fichiers audio pour générer un fichier de communication d'enregistrement d'écran unique, dans lequel les premier et second fichiers audio et le fichier vidéo sont synchronisés avec une horloge commune ;
générer un fichier de métadonnées correspondant à la pluralité de communications multimédia, dans lequel le fichier de métadonnées comprend une heure de début de chacune de la pluralité de communications multimédia par rapport à la session d'enregistrement d'écran ;
stocker le fichier de métadonnées en association avec le fichier de communication d'enregistrement d'écran unique ;
afficher une interface utilisateur pour afficher une vidéo de la session d'enregistrement d'écran, dans lequel l'interface utilisateur comporte une barre de progression pour la vidéo ;
afficher un marqueur sur la base du fichier de métadonnées le long d'un emplacement de la barre de progression correspondant à l'heure de début de chacune de la pluralité de communications multimédia ;
détecter la sélection d'un premier marqueur correspondant au premier appel téléphonique ;
naviguer vers un premier emplacement de la vidéo correspondant au premier appel téléphonique en réponse à la détection d'une sélection du premier marqueur ;
lire une première partie de la vidéo sur la base de la partie parcourue de la vidéo ; et
lire l'audio correspondant au premier appel téléphonique en synchronisation avec la lecture de la première partie de la vidéo ;
détecter la sélection d'un second marqueur correspondant à la communication par courrier électronique ou par chat ;
en réponse à la sélection du second marqueur :
naviguer vers un second emplacement de la vidéo correspondant à la communication par courrier électronique ou par chat ;
lire une seconde partie de la vidéo sur la base du second emplacement parcouru de la vidéo ;
récupérer la communication par courrier électronique ou par chat depuis un dispositif de stockage de données ; et
afficher la communication par courrier électronique ou par chat récupérée.

2. Système selon l'une quelconque de la revendication 1, dans lequel le fichier de métadonnées comprend en outre une heure d'arrêt de la communication multimédia par rapport à la session d'enregistrement d'écran, ou les métadonnées comprennent une identification d'un type de la communication multimédia, ou des informations de profil d'une entité prenant part à la communication multimédia.

3. Système selon l'une des revendications 1 et 2, dans lequel les instructions amènent en outre le processeur à :
générer une image de la session d'enregistrement d'écran correspondant à la communication multimédia ; et
afficher l'image dans l'interface utilisateur.

4. Système selon l'une des revendications 1 à 3, dans lequel les instructions amènent en outre le processeur à :
recevoir une requête de recherche ;
comparer la requête de recherche avec des informations stockées dans le fichier de métadonnées ; et
renvoyer un résultat de recherche sur la base de la comparaison répertoriant le fichier vidéo correspondant au résultat de recherche.

5. Système selon la revendication 4, dans lequel les instructions amènent en outre le processeur à :
recevoir une sélection sur la base du résultat de recherche ; et
afficher la vidéo en réponse à la sélection sur la base du résultat de recherche.

6. Système selon la revendication 1, dans lequel les instructions amènent en outre le processeur à :
générer une pluralité d'images de la session d'enregistrement d'écran correspondant à la communication multimédia ;
afficher les images dans une galerie d'images, dans lequel les images comprennent un segment du fichier vidéo correspondant à la session d'enregistrement d'écran pendant la communication multimédia.

7. Système selon la revendication 6, dans lequel les images correspondent au marqueur, dans lequel les instructions amènent en outre le processeur à :
afficher la pluralité d'images en réponse à la sélection du marqueur ;
recevoir une sélection pour agrandir au moins l'une des images ; et
afficher une version agrandie de l'au moins une des images en réponse à la sélection pour agrandir l' au moins une des images.

8. Procédé pour enregistrer des interactions d'agents, le procédé comprenant :
l'initiation, par un processeur, d'une session d'enregistrement d'écran sur un dispositif électronique accessible à un agent de centre d'appel, la session d'enregistrement d'écran servant à générer un fichier vidéo avec un enregistrement vidéo d'un écran d'affichage couplé au dispositif électronique, l'enregistrement vidéo s'étendant sur une période de temps particulière ;
la surveillance, par le processeur, d'une communication multimédia se produisant sur le dispositif électronique ;
la réception, par le processeur, d'une pluralité de communications multimédia pendant la session d'enregistrement d'écran, dans lequel la pluralité de communications multimédia comporte un premier appel téléphonique se produisant à une première période de temps, un second appel téléphonique se produisant à une deuxième période de temps, et une communication par courrier électronique ou par chat se produisant à une troisième période de temps ;
la génération, par le processeur, de premier et second fichiers audio pour respectivement le premier appel téléphonique et le second appel téléphonique ;
la fusion, par le processeur, du fichier vidéo et des premier et second fichiers audio pour générer un fichier de communication d'enregistrement d'écran unique, dans lequel les premier et second fichiers audio et le fichier vidéo sont synchronisés avec une horloge commune ;
la génération, par le processeur, d'un fichier de métadonnées correspondant à la pluralité de communications multimédia, dans lequel le fichier de métadonnées comprend une heure de début de chacune de la pluralité de communications multimédia par rapport à la session d'enregistrement d'écran ;
le stockage, par le processeur, du fichier de métadonnées en association avec le fichier de communication d'enregistrement d'écran unique ;
l'affichage, par le processeur, d'une interface utilisateur pour afficher une vidéo de la session d'enregistrement d'écran, dans lequel l'interface utilisateur comporte une barre de progression pour la vidéo ;
l'affichage, par le processeur, d'un marqueur sur la base du fichier de métadonnées le long d'un emplacement de la barre de progression correspondant à l'heure de début de chacune de la pluralité de communications multimédia ;
la détection, par le processeur, de la sélection d'un premier marqueur correspondant au premier appel téléphonique ;
la navigation, par le processeur, vers un premier emplacement de la vidéo correspondant au premier appel téléphonique en réponse à la détection d'une sélection du premier marqueur ;
la lecture, par le processeur, d'une première partie de la vidéo sur la base du premier emplacement parcouru de la vidéo ;
la lecture, par le processeur, de l'audio correspondant au premier appel téléphonique en synchronisation avec la lecture de la première partie de la vidéo
la détection, par le processeur, de la sélection d'un second marqueur correspondant à la communication par courrier électronique ou par chat ;
en réponse à la sélection du second marqueur :
la navigation, par le processeur, vers un second emplacement de la vidéo correspondant à la communication par courrier électronique ou par chat ;
la lecture d'une seconde partie de la vidéo sur la base du second emplacement parcouru de la vidéo ;
la récupération de la communication par courrier électronique ou par chat depuis un dispositif de stockage de données ; et
l'affichage de la communication par courrier électronique ou par chat récupérée.
